# EUROPEAN PATENT APPLICATION

(11) **EP 4 329 192 A1**
(43) Date of publication of application: **28.02.2024**
(21) Application number: 23169417.5
(22) Date of filing: 24.04.2023
(51) Int. Cl.: H02S 20/23, F24S 25/61, F24S 25/632, F24S 25/636, H02S 20/26, F24S 25/60

(54) **JOBSITE ASSEMBLED RAIL-LESS SOLAR PANEL MOUNTING SYSTEM FOR ROOFS AND METHODS FOR THE SAME**

(30) Priority: 27.08.2022 US 202217822784; 23.11.2022 US 202218058731; 23.03.2023 US 202318188670
(71) Applicant: Sunmodo Corporation, Vancouver WA 98682 (US)
(72) Inventor: JASMIN, Roland, Vancouver, 98682 (US); LIU, Jun, Vancouver, 98682 (US); MUMMA, Steve, Vancouver, 98682 (US)
(74) Representative: Haseltine Lake Kempner LLP

(57) **Abstract**

Discussed are solar panel systems as well as devices and methods for mounting the solar panel systems to roofs and building structures. Catch clamp, mid clamp, and optionally end clamp assemblies can be preinstalled to the solar panels at the job site before placing and securing the resulting solar panel assemblies to the building structure such as a roof. After an installer places and secures a first solar panel assembly to the building structure, they can install each subsequent solar panel assemblies by attaching the leading edge of the subsequent solar panel assembly to the trailing edge of the previous solar panel assembly using a catch and catch receiver, hook and slot, tab and slot, or similar mechanism.

## Description

### BACKGROUND

This disclosure relates to a rail-less solar panel system and methods for mounting the solar panel system to building structures such as roofs.

Solar photovoltaic panels, or simply "solar panels" in this disclosure, are installed on various types of residential and commercial roofs. These roofs can be found on building roof tops or on shade structures such as awnings and carports.

Residential and commercial solar panel assemblies or solar panel arrays come in a variety sizes and configurations. For example, a 20-kW residential array using 480 W solar panels would require forty-two solar panels. A 1000 kW (1 MW) commercial system using 480 W solar panels would require over 2000 solar panels. Both large commercial systems and small residential systems typically require a mounting system or a "racking system" to secure the solar panel array to a roof or building structure. Racking systems for roofs can generally be divided into two types: rail-based and rail-less. Rail-based racking systems typically include mounting brackets, solar panel clamps, fasteners, rails, and flashing. Rail-less systems can also include mounting brackets, solar panel clamps, fasteners, and flashing, but eliminate the rails.

In a rail-less system, the installer typically plans and measures where to place the brackets. The installer then secures the brackets along with flashing or other water proofing material to the roof with roof fasteners such as lag bolts or deck screws. The solar panel is then attached to the brackets using solar panel clamps. Solar panel clamps that clamp to the top of the solar panel frame are called over-the-panel clamps. These are also referred to as solar panel top clamps. Solar panel clamps that clamp the inside lip or flange (i.e., the return flange) of the bottom of the solar panel frame are known as under-the-panel clamps. These are also referred to as solar panel bottom clamps. Solar panel top clamps and bottom clamps that clamp to the outside perimeter of a solar panel array are known as end clamps. Solar panel top clamps or bottom clamps that clamp between solar panels (i.e., to two solar panels) are known as mid clamps.

### SUMMARY

The inventor observed that rail-less solar panel arrays are prone to installation errors and require a higher level of training as compared to rail-based systems, because of the installation complexity. The inventor set out to create a rail-less solar panel system that was simple to install and reduced installation time and error.

The inventor created a rail-less solar panel system where an installer secures components such as catch clamp, mid clamp, and optionally end clamp assemblies to solar panels before placing and securing the resulting solar panel assemblies to a building structure. The building structure is typically a roof. These components can be preinstalled to the solar panel on a work surface at the job site such as a driveway, work bench, the ground, the roof, in a work truck or van, or against a wall. The components can be structured so the installer can secure them to the solar panels while the solar panels are face down on the work surface. With the first solar panel assembly to the building structure, the installer installs subsequent solar panel assemblies by attaching the leading edge of the subsequent solar panel assembly to the trailing edge of the previous solar panel assembly using a catch and catch receiver, hook and slot, tab and slot, or similar mechanism.

The solar panel assemblies are typically installed in columns, with subsequent columns positioned and installed adjacent to previously installed columns. The first solar panel assembly within a column includes mid clamp assemblies secured to the solar panel's trailing edge and mid clamp or end clamp assemblies secured to the solar panel's leading edge. Each subsequent solar panel assembly within a column, except for the last, includes catch clamp assemblies secured to their solar panel's leading edge and mid clamp assemblies secured to their solar panel's trialing edge. The final solar panel assembly within a column can optionally include end clamp assemblies in place of the mid clamp assemblies on their solar panel's trailing edge.

Catch clamp assembles can include a catch, hook, or tab mechanism that engages and secures to catch receivers, hook-receiving slots, tab-receiving slots, or similar mechanisms in the mid clamp assemblies. Catch clamp assemblies secured on the leading edge of an uninstalled solar panel assembly can engage and secure to mid clamp assemblies attached to the trailing edge of an installed solar panel assembly.

Catch clamp assemblies can include a seating platform structured as a hook arm with an open end and a generally curve-shaped seating surface. The open end can be a ball hook catch, a hook, or a tab. This hook arm engages a hook receiver in a mid clamp assembly that is attached to the trailing edge of an installed solar panel. The hook receiver of the mid clamp assembly can have a generally concave-shaped interior shaped to receive a ball hook catch. It can alternatively be a tab-receiving slot, a hook receiving slot, or other mechanism capable of receiving the open end. The hook arm of the catch clamp assembly can have a generally curve-shaped lower surface that engages a panel hook platform associated with the hook receiver. The curve-shaped lower surface is typically convex with respect to the panel hook platform (i.e., downward-facing generally convex shape). This allows the catch clamp and its solar panel assembly to rotate or pivot as the open end engages the hook receiver in the mid clamp assembly. Once the catch clamp is engaged and secured with the catch receiver, the installer can fasten the solar panel mounting clamps attached to the trialing edge of the solar panel assembly to the building surface using threaded fasteners such as deck screws or lag bolts with sealing washers.

The installer can preassemble and install additional solar panel assemblies in a similar way. The installer will pre-assemble catch clamp assemblies on the leading edge and mid clamp assemblies on the trailing edge of the additional solar panel. The exception being, where the last solar panel assembly in the column end clamp assemblies can optionally be secured to the trailing edge. The installer then secures the resulting solar panel assembly to the previous solar panel assembly by engaging the catch clamp assemblies with the catch receivers and panel hook platforms mounted to the trailing edge of the previous solar panel assembly. With the catch clamp assemblies secured to the catch receivers, and the feet of the solar panel assembly touching the building surface, the installer then secures the solar panel assembly by fastening the feet of the solar panel mounting bracket assembly to the building surface.

Solar panel manufacturers typically include holes or apertures drilled through the bottom, or return flange, of the solar panel frame. Some of these apertures are for mounting while others are for drainage. For a given solar panel model, the mounting apertures are consistently positioned from panel to panel. Observing this, the inventor envisions that the solar panel installer can optionally align the solar panel mounting clamp assemblies and the solar panel catch clamp assemblies to the manufacturer-provided mounting holes to assure consistent placement of these components without measurement.

The described assembly methods and devices have several advantages. They reduce installation time and complexity as compared with typical rail-based and rail-less systems. The installer can attach catch clamp, mid clamp, and end clamp assemblies to solar panels and attach the resulting solar panel assembly to the building structure without complicated measurements and without pre-placement of solar panel mounting brackets on the building structure. Installation error is reduced. Other rail-less systems typically require the installer to secure the mounting brackets to the roof first before attaching their respective solar panels. If there is a mistake in placement, the mounting brackets would have to be removed, the consequent hole filled, and the mounting brackets reinstalled in the correct location. In contrast, the solar panel assemblies of this disclosure, have their solar panel clamp assemblies pre-attached to the solar panel before attaching the solar panel assembly to the roof.

An installer can use the installation methods described in this disclosure for a variety of roof types. These roof types include shingle roofs, shake roofs, tile roofs with flat roof tiles, or concrete roofs. In addition, an installer can use the installation methods described in this disclosure for planar portions of metal roofs. For example, the installer may use the installation methods described in this disclosure, to secure a solar panel array to planar portions of flat metal roofs, metal shake roofs, metal shingle roofs, and metal tile roofs. Additionally, an installer may use the installation methods described in this disclosure to secure a solar panel array to the top portion of trapezoidal roofs, and the planar portion of standing seam roofs. This disclosure also provides examples of hinged metal roof mounts. Using these hinged metal roof mounts, an installer can use the methods described, to install solar panel arrays to both planar and non-planar metal roofs. Examples of non-planar metal roofs may include corrugated roofs, the top and side portions trapezoidal roofs, as well as uneven portions of standing seam roofs, metal shake roofs, metal shingle roofs, and metal tile roofs.

These examples and advantages discussed in this Summary are representative but not all-inclusive. The inventive concept is not limited to the examples given or the discussed advantages. The Detailed Description, drawings, and claims reveal additional features and advantages.

### BRIEF DESCRIPTION OF DRAWINGS

FIG. 1 illustrates, in front and top perspective view, a solar panel array, arranged in landscape orientation, using solar panel clamp assemblies and other devices of this disclosure.
FIG. 2 illustrates, in front and top perspective view, the solar panel array of FIG. 1, with solar cell removed from their frames on three of the solar panels and the skirts removed from the solar panel array, to show solar panel clamp assemblies and other devices attached to the solar panel frame.
FIG. 3 shows, in top view, a column of the solar panel array of FIG. 1, after solar panels are attached to the building structure surface.
FIG. 4 illustrates, in left side view, the solar panel assembly of FIG. 3.
FIG. 5 illustrates an enlarged view of part of FIG. 4, with the solar panel cutaway to show the relationship between the end clamp assembly and the solar panel frame.
FIG. 6 illustrates an enlarged view of part of FIG. 4, with the solar panel cutaway to show the relation between the mid clamp assembly, the catch clamp assembly, and the solar panel frame.
FIG. 7 illustrates, in front and top perspective view, a solar panel array, arranged in portrait orientation, using solar panel clamp assemblies and other devices of this disclosure.
FIG. 8 illustrates, in front and top perspective view, the solar panel array of FIG. 7, with solar cell removed from their frames of two of the solar panels to show solar panel clamp assemblies and other devices attached to the solar panel frame.
FIG. 9 illustrates a flow chart showing a method for pre-assembling solar panel assemblies and securing the resulting solar panel assemblies to a building structure.
FIG. 10 illustrates a flow chart showing in more detail the step of pre-attaching solar panel clamp assemblies to solar panels resulting in solar panel assemblies.
FIG. 11 illustrates a flow chart similar to FIG. 10 with the addition of pre-attaching accessories such as wire management clips or module level power electronics.
FIGS. 12 and 13 illustrates, in perspective view, a sequence for attaching solar panel clamp assemblies and accessories using the methods of FIGS. 10, 11, 22, and 32.
FIGS. 14 and 15 illustrate, in perspective view, a sequence for attaching solar panel mounting clamps, catch clamps, and accessories to the second solar panel frame using the methods of FIGS. 10, 11, 22, and 32.
FIGS. 16 and 17 illustrate, in perspective view, a sequence for attaching solar panel mounting clamps, catch clamps, and accessories to the third solar panel frame using the methods of FIGS. 10, 11, 22, and 32.
FIGS. 18 and 19 illustrate a sequence for attaching module-level power electronics to a solar panel resting face down on a work surface.
FIGS. 20 and 21 illustrate a sequence for attaching wire management clips to a solar panel resting face down on a work surface.
FIG. 22 illustrates a flow chart similar to FIG. 10 where the installer turns over or more of the solar panels face down onto a work surface before attaching end clamp, mid clamp, or catch clamp assemblies.
FIGS. 23 and 24 illustrates, in side view, a sequence for attaching a first solar panel assembly to a building structure.
FIGS. 25 and 26 illustrate a sequence of attaching a second solar panel assembly to the first solar panel assembly and to the building structure.
FIG. 27 illustrates an enlarged view of part of FIG. 25, showing the catch clamp assembly attaching to the solar panel mid clamp assembly.
FIGS. 28 and 29 illustrate a sequence of attaching a third solar panel assembly to the second solar panel assembly and to the building structure.
FIG. 30 illustrates, in side view, adjusting of the distance of the solar panel assembly from the building structure.
FIG. 31 illustrates a bottom view of the solar panel showing typical placement of mounting holes pre-drilled by the solar panel manufacturer.
FIG. 32 illustrates a flow chart similar to FIG. 10 where the solar panel clamp assemblies are aligned to manufacturer-provided mounting holes before attachment to the solar panel.
FIGS. 33-37 illustrate a sequence of attaching a solar panel end clamp assembly to a solar panel resting face down on a work surface.
FIGS. 38-42 illustrate a sequence of attaching a solar panel mid clamp assembly to a solar panel resting face down on a work surface.
FIGS. 43-46 illustrate an alternate sequence of attaching a solar panel end clamp assembly to a solar panel resting face down on a work surface.
FIGS. 47-50 illustrate an alternate sequence of attaching a solar panel mid clamp assembly to a solar panel resting face down on a work surface.
FIGS. 51-53 illustrates a sequence of attaching a catch clamp assembly to a solar panel resting face down on a work surface.
FIGS. 54-56 illustrate a sequence of attaching a skirt clamp assembly to a solar panel after the solar panel is mounted to the building surface.
FIGS. 57 and 58 illustrate attaching a solar panel skirt to a skirt clamp and solar panel.
FIGS. 59, 60, and 61 illustrate in exploded isometric view, isometric view, and side view, respectively, of a catch clamp assembly.
FIGS. 62, 63, and 64 illustrate in exploded isometric view, isometric view, and side view, respectively, of a solar panel mid clamp assembly.
FIGS. 65, 66, and 67 illustrate in exploded isometric view, isometric view, and side view, respectively, of a solar panel end clamp assembly.
FIGS. 68, 69, and 70 illustrate in exploded isometric view, isometric view, and side view, respectively, of a solar panel skirt splice clamp assembly.
FIGS. 71, 72, and 73 illustrate in exploded isometric view, isometric view, and side view, respectively, of a solar panel splice clamp assembly.
FIGS. 74, 75, and 76 illustrate in exploded isometric view, isometric view, and side view, respectively, of an alternative solar panel end clamp assembly.
FIGS. 77, 78, and 79 illustrate in exploded isometric view, isometric view, and side view, respectively, of an alternative solar panel mid clamp assembly.
FIGS. 80, 81, and 82 illustrate in exploded isometric view, isometric view, and side view, respectively, of an alternative catch clamp assembly.
FIGS. 83-87 illustrate a sequence of attaching the solar panel end clamp assembly of FIGS. 74-76 to a solar panel resting face down on a work surface.
FIGS. 88-92 illustrate an alternative sequence of attaching a solar panel end clamp assembly of FIGS. 74-76 to a solar panel resting face down on a work surface.
FIG. 93 illustrates a mid clamp assembly for use on a variety of even and uneven metal roof surfaces.
FIG. 94 illustrates an end clamp assembly for use on a variety of even and uneven metal roof surfaces.
FIGS. 95 and 96 illustrate, in perspective view, a sequence for attaching solar panel clamp assemblies and accessories using the methods of FIGS. 9-11, 22, and 32.
FIGS. 97 and 98 illustrate, in perspective view, a sequence for attaching solar panel mounting clamps, catch clamps, and accessories to the second solar panel frame using the methods of FIGS. 9-11, 22, and 32.
FIGS. 99-103 illustrate a sequence of attaching a solar panel end clamp assembly to a solar panel, with the solar panel resting face down on a work surface.
FIGS. 104-108 illustrate a sequence of attaching a solar panel mid clamp assembly to a solar panel, with the solar panel resting face down on a work surface.
FIGS. 109 and 110 illustrate, in side view, a sequence for attaching a first solar panel assembly to a metal roof using instances of the mid clamp assembly of FIG. 93, and the end clamp assembly of FIG. 94.
FIGS. 111 and 112 illustrate a sequence of attaching a second solar panel assembly to the first solar panel assembly, and to the metal roof using instances of the mid clamp assembly of FIG. 93, the end clamp assembly of FIG. 94, and the catch clamp assembly of FIG. 60.
FIG. 113 illustrates an enlarged view of part of FIG. 111, showing the catch clamp assembly attaching to the solar panel mid clamp assembly.
FIG. 114 illustrates, in front view, the end clamp assembly of FIG. 94 that includes a hinged metal roof mount, secured to a corrugated metal roof, with the front of the roof cut away for clarity and to show mounting details.
FIG. 115 illustrates in front view, the end clamp assembly of FIG. 94 that includes a hinged metal roof mount, secured to a flat metal roof with the front of the roof cut away for clarity and to show mounting details.
FIG. 116 illustrates, in front view, the end clamp assembly of FIG. 94 that includes a hinged metal roof mount adjusted to approximately maximum width, and secured to a trapezoidal roof with the front of the roof cut away for clarity.
FIG. 117 illustrates in front view, the end clamp assembly of FIG. 94 that includes a hinged metal roof mount, secured to a trapezoidal roof peak that is wider and taller than the trapezoidal roof of FIGS. 116, with the front of the roof cut away for clarity and to show mounting details.
FIG. 118 illustrates a front and top isometric view of the hinged metal roof mount used in FIGS. 93-113.
FIG. 119 illustrates a portion of FIG. 118, enlarged to magnify a portion of the hinge sleeve passing through the slot-shaped aperture as viewed from an inside face in the hinge base.
FIG. 120 illustrates a portion of FIG. 115, in front view, enlarged to magnify a portion of the hinge sleeve, hinge pin, and riser.
FIG. 121 illustrates, an exploded isometric view, of the hinged metal roof mount from FIG. 118.

### DETAILED DESCRIPTION

When describing the figures, the terms "top," "bottom," "front," "side," "left," and "right" are relative terms. Specific dimensions are intended to help the reader understand the scale of the discussed material. Dimensions given are typical and the claims are not limited to the recited dimensions. Ordinals such as "first," "second," or "third," are used in this Detailed Description and in the claims to differentiate between similarly-named parts and do not imply a particular order, preference, or importance. "Optional" or "optionally" is used throughout this disclosure to describe features or structures that are optional. Not using the word "optional" or "optionally" to describe a feature or structure does not imply that the feature or structure is not optional. Finally, the word "or" is used in the ordinary sense to mean an "inclusive or," unless preceded by a qualifier, such as the word "either," that signals an "exclusive or."

The Detailed Description is organized in these sections: Definitions, System Overview, Assembly Method, Components, Additional Assembly Methods and Components for Metal Roofs, and Conclusion.

### Definitions

Return Flange: As defined in this disclosure, a return flange is the lower lip portion of a solar panel frame that projects inward underneath the solar panel.

Manufacturer-Provided Mounting Holes: As defined in this disclosure, manufacturer-provided mounting holes are mounting holes pre-drilled or pre-punched by the manufacturer of the solar panel in the return flange of the solar panel frame.

Solar Panel Bottom Clamp: As defined in this disclosure, a solar panel bottom clamp is a device secured to the return flange or the inside frame of the solar panel.

Solar Panel Clamp Assembly: As defined in this disclosure, a solar panel clamp assembly is a device directly securable to a solar panel and directly securable to a building structure. A solar panel clamp assembly can be a mid clamp assembly or an end clamp assembly.

Mid Clamp Assembly: As defined in this disclosure, a mid clamp assembly is a device directly securable to two adjacent solar panels and directly securable to a building structure. A mid clamp assembly can function as an end clamp assembly.

End Clamp Assembly: As defined in this disclosure, an end clamp assembly is a device directly securable to one solar panel, but not two adjacent solar panels, and directly securable to a building structure.

Catch Clamp Assembly: As defined in this disclosure, a catch clamp assembly is a device that is directly securable to a solar panel and is removably securable to a mid clamp assembly that is secured to a directly adjacent solar panel.

### System Overview

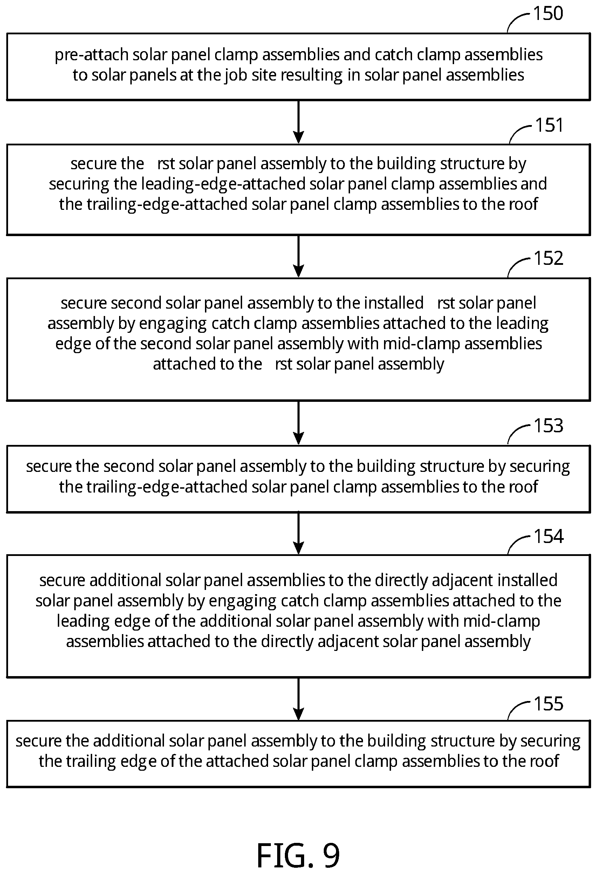

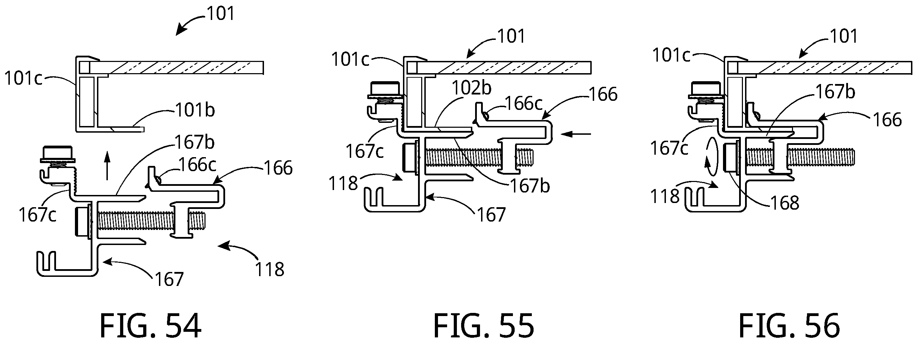

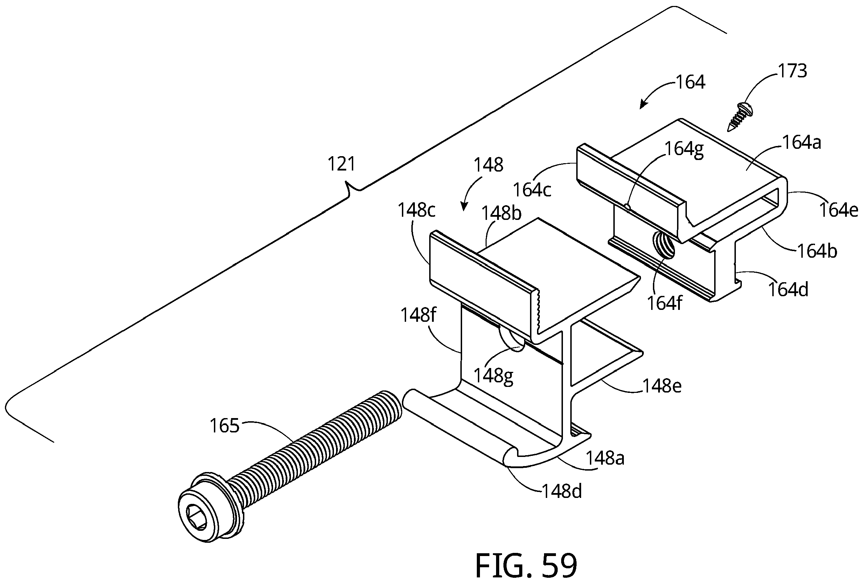

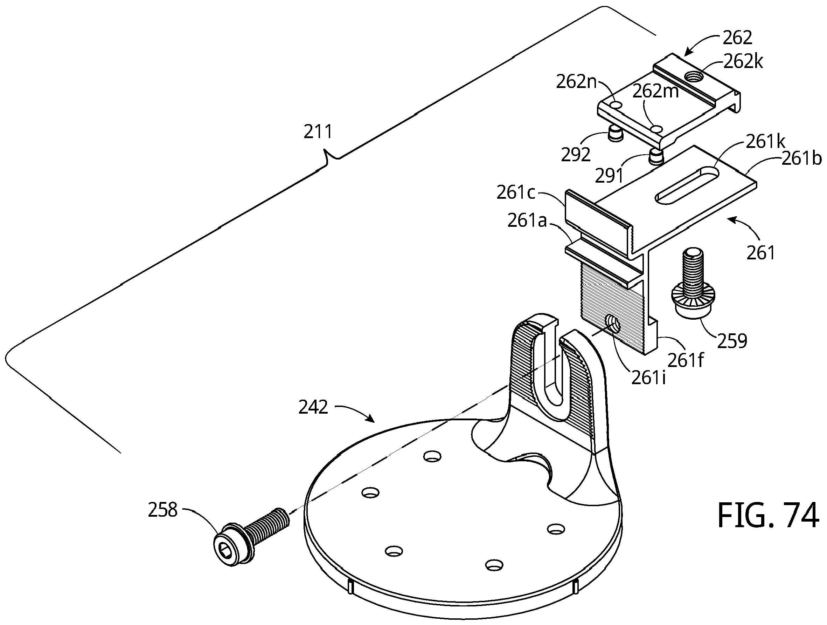

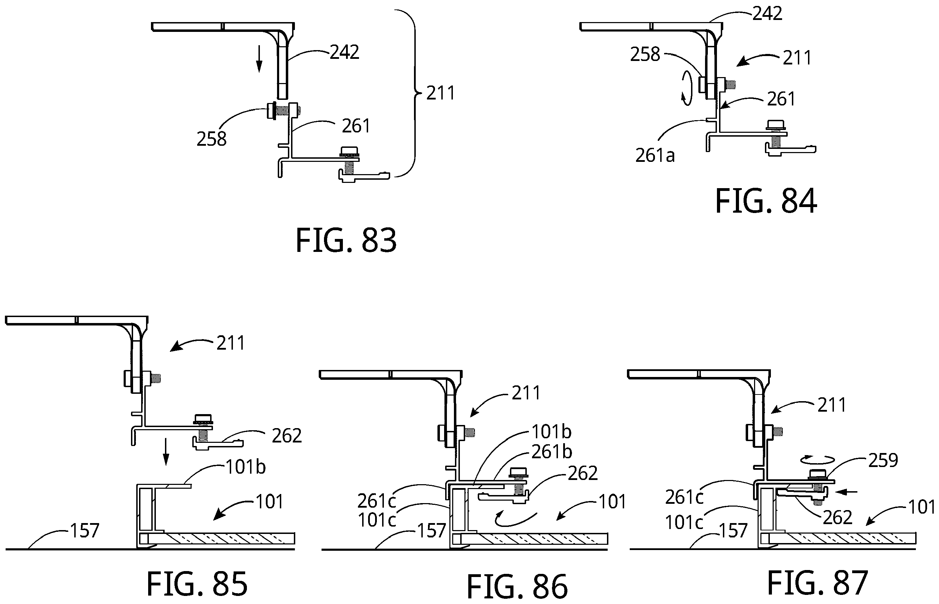

The system includes solar panel assemblies arranged in an array of rows and columns. Unlike other rail-less solar panel systems, the installer preassemblies catch clamp, mid clamp, and optionally end clamp assemblies to solar panels before the installer places and secures the resulting solar panel assemblies to a building structure or roof. After the installer places and secures the first solar panel assembly to the building structure, the installer installs subsequent solar panel assemblies by attaching the leading edge of the subsequent solar panel assembly to the trailing edge of the previous solar panel assembly using a catch and catch receiver, hook and slot, tab and slot, or similar mechanism. FIGS. 9-53 describe this process in more detail. FIGS. 54-58 describe the process of attaching an optional skirt assembly. FIGS. 59-73 discuss examples of the components: the catch clamp, mid clamp, end clamp, and skirt clamp assemblies. FIGS. 74-82 discuss alternative end clamp, mid clamp, and catch clamp assemblies. FIGS. 83-92 discuss assembly sequences for the alternative assemblies.

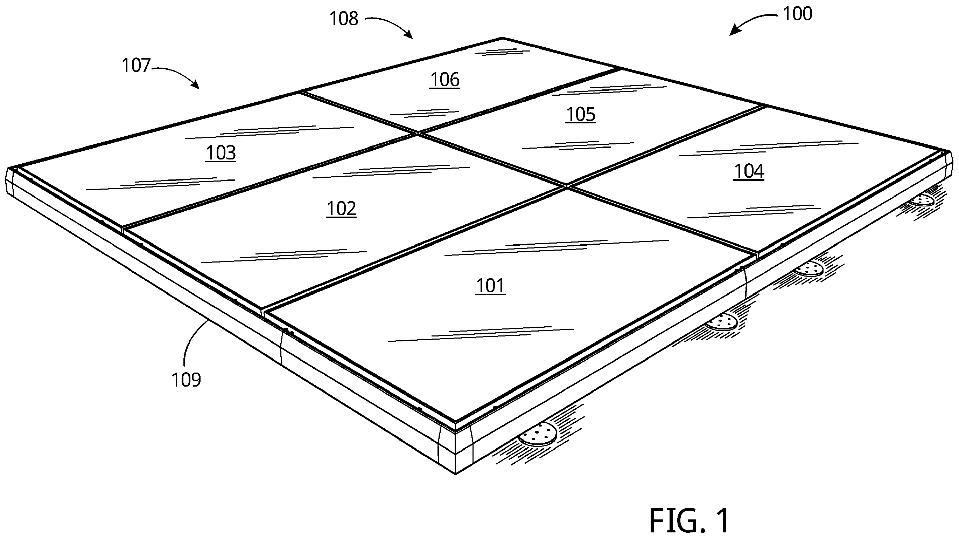

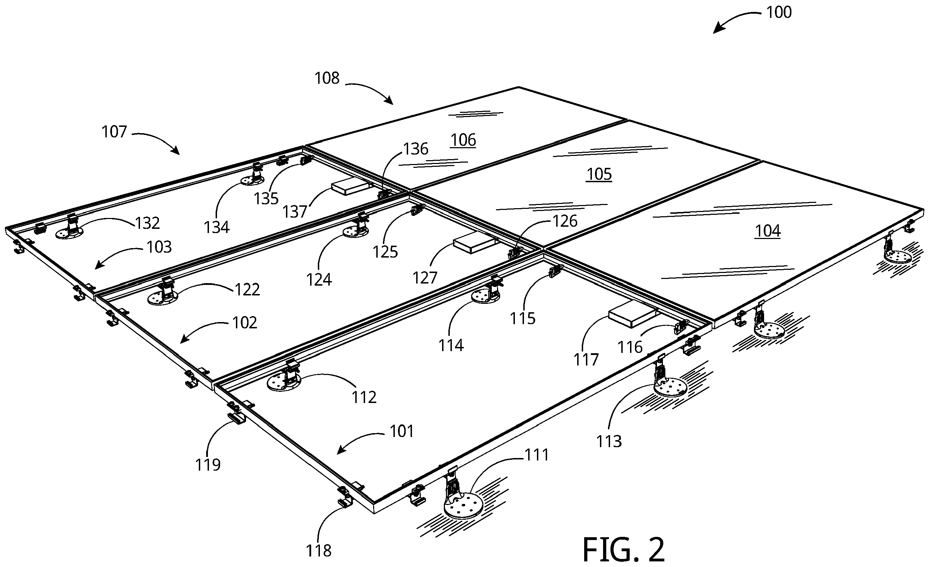

FIGS. 1-8 illustrate an overview of a finished solar panel array that uses methods and components described in this disclosure. FIGS. 1 and 2 shows a simplified array of solar panels, solar panel array 100, arranged in three rows and in two columns. The first solar panel 101, the second solar panel 102, and the third solar panel 103 are arranged in column 107. Solar panels 104, 105, 106 are arranged in column 108. FIG. 1 shows an optional skirt assembly, skirt assembly 109, that surrounds the perimeter of the solar panel array 100. The skirt assembly 109 helps to create a unified appearance.

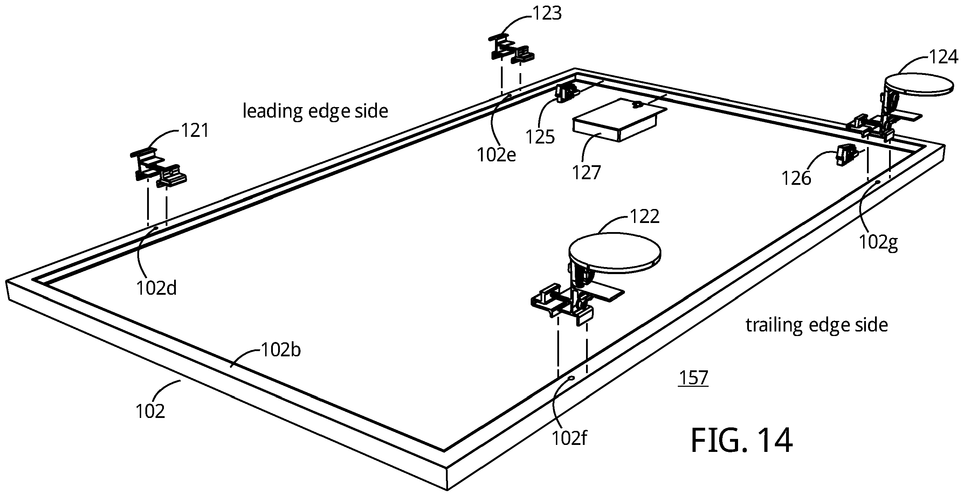

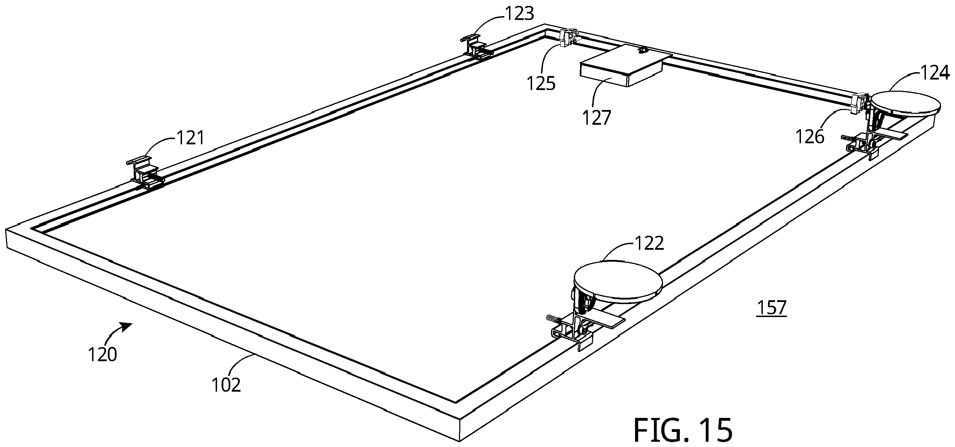

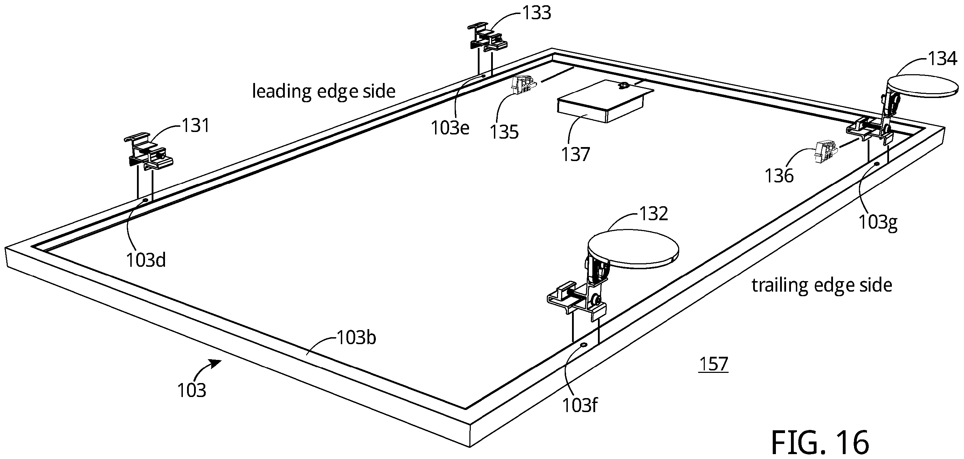

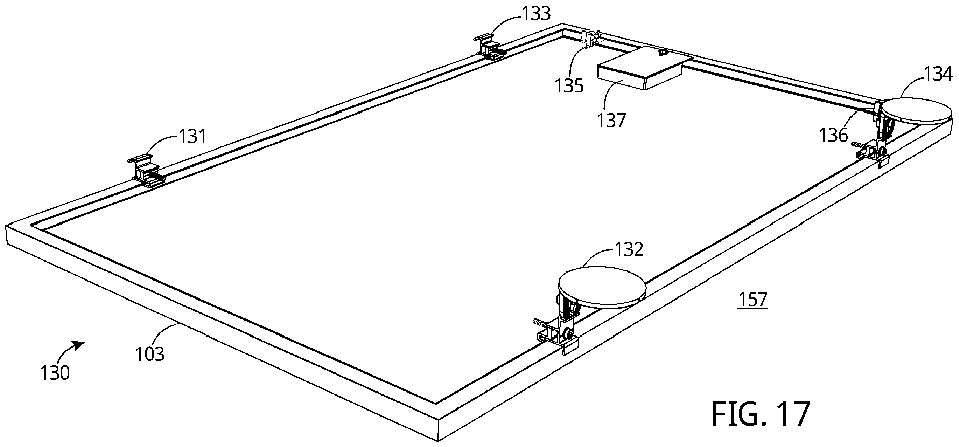

FIG. 2 shows the solar panel array 100 with the skirt assembly 109 of FIG. 1 removed to reveal skirt bracket assemblies used to secure the skirt assemblies to the solar panel frames. For example, FIG. 2 shows instances of skirt bracket assembly 118 and skirt splice assembly 119. FIG. 2 also shows the solar cells and their associated glass and substrates removed from the first solar panel 101, the second solar panel 102, and the third solar panel 103 from their respective frames to reveal solar panel mounting assemblies and accessories hidden beneath. FIG. 2 shows solar panel clamp assemblies secured to the first solar panel 101. These solar panel clamp assemblies are illustrated as the end clamp assemblies 111, 113 and the mid clamp assemblies 112, 114. Solar panel clamp assemblies, i.e., the mid clamp assemblies 122, 124 are shown attached to the trailing edge of the second solar panel 102. Catch clamp assemblies 121, 123 are secured to the leading edge of the second solar panel 102. These catch clamp assemblies are hidden from view but are shown in FIGS. 14 and 15. Referring to FIG. 2, solar panel clamp assemblies, i.e., end clamp assemblies 132, 134, are shown secured to the trailing edge of the third solar panel 103. Catch clamp assemblies 131, 133 are secured to the leading edge of the solar panel frame. They are hidden from view, but are shown in FIGS. 16 and 17. FIG. 2 also illustrates optional accessories. These optional accessories include wire management clips 115, 116, and module level power electronics (MLPE), i.e., the MLPE 117, attached to the first solar panel 101. They also include wire management clips 125, 126, and the MLPE 127 attached to the second solar panel 102. And include wire management clips 135, 136, and the MLPE 137 attached to the third solar panel 103.

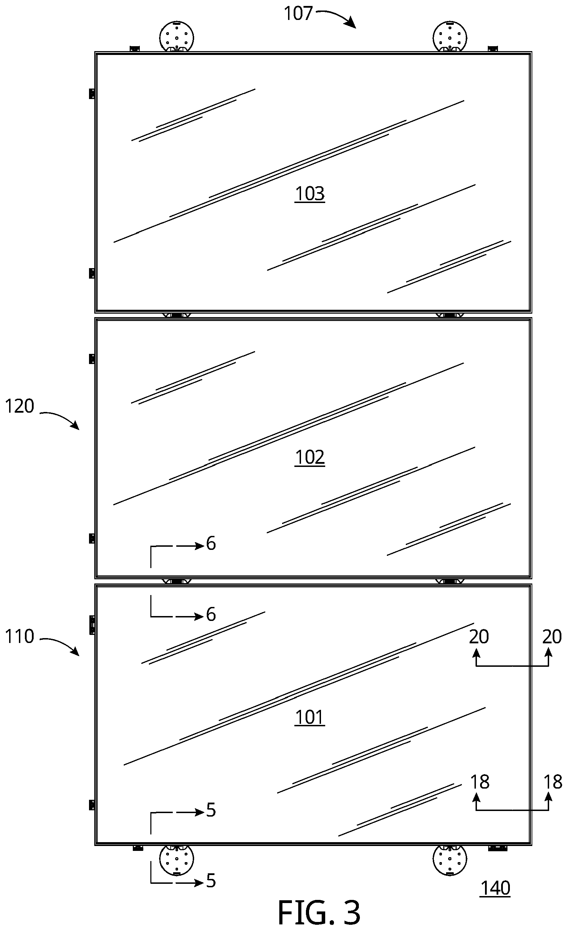

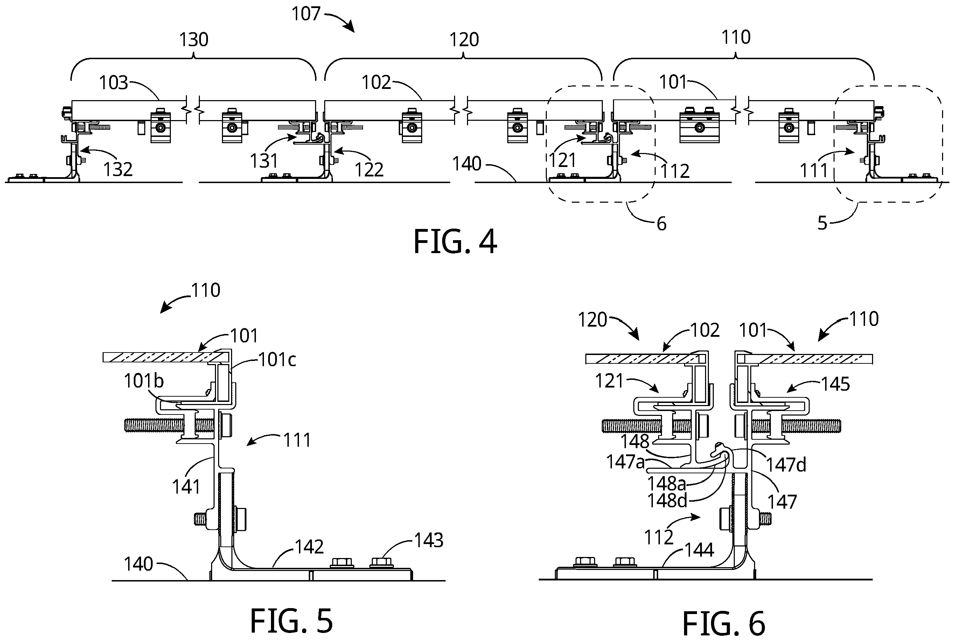

The solar panel array is typically assembled column by column. FIG. 3 shows the column 107 of the solar panel array 100 of FIG. 1, with the first solar panel 101, the second solar panel 102, and the third solar panel 103 after they are attached to the building structure surface, for example, roof 140. FIG. 4 illustrates a side view of column 107. Referring to FIG. 4, column 107 includes the first solar panel assembly 110, second solar panel assembly 120, and third solar panel assembly 130. These solar panel assemblies are preassembled on the job site by an installer, for example, on the ground or on the building structure, before they are secured to one another and to the roof 140. First solar panel assembly 110 includes the first solar panel 101, end clamp assembly 111, and mid clamp assembly 112. The end clamp assembly 111 is secured to the leading edge of the first solar panel 101. The mid clamp assembly 112 is secured to the trialing edge of the first solar panel 101. The second solar panel assembly 120 includes the second solar panel 102, the catch clamp assembly 121, and the mid clamp assembly 122. The catch clamp assembly 121 is secured to the leading edge of the second solar panel 102. The mid clamp assembly 122 is secured to the trialing edge of second solar panel 102. The third solar panel assembly 130 includes the third solar panel 103, the catch clamp assembly 131, and the end clamp assembly 132. The catch clamp assembly 131 is secured to the leading edge of the third solar panel 103. The end clamp assembly 132 is secured to the trialing edge of the third solar panel 103. The installer can substitute a mid clamp assembly for the end clamp assembly 132 to extend the column with more rows. Column 107 could optionally end with a mid clamp assembly in place of the end clamp assembly 132.

FIG. 5 shows an enlarged part of FIG. 4 taken in cross section along section lines 5-5 from FIG. 3. FIG. 6 shows an enlarged part of FIG. 4 taken along section lines 6-6 from FIG. 3. Referring to FIG. 5, the end clamp assembly 111 includes an end clamp bracket assembly 141 and an L-foot 142. The end clamp assembly 111 secures the first solar panel 101 by clamping the inside and the outside of the solar panel frame 101c and extends over and under the return flange 101b. The end clamp bracket assembly 141 is secured to the L-foot 142. The L-foot 142 is secured to the roof 140, by multiple instances of threaded fastener 143. The threaded fastener 143 can be a deck screw, lag bolt, or any threaded fastener capable of securing the L-foot 142 to the roof 140 and have enough holding strength to keep the first solar panel assembly 110 secured to the roof 140 under expected environmental conditions such as rain and wind storms.

Referring to FIG. 6, the mid clamp assembly 112 includes an L-foot 144 and a mid clamp bracket assembly 145. The mid clamp assembly 112 is secured to the trailing edge of the first solar panel 101. The mid clamp bracket assembly 145 includes a mid clamp bracket 147. The mid clamp bracket includes a panel hook platform 147a and a hook receiver 147d to capture, receive, and secure an open end of a seating platform of a catch clamp assembly. The hook receiver 147d, as illustrated, includes a generally concave-shaped interior with an end portion that extends toward the panel hook platform 147a. The hook receiver 147d is so shaped to create a rotational stop for the open end 148d. The seating platform is structured as a hook arm 148a that includes an open end 148d and a generally curve-shaped seating surface and can be a downward-facing generally convex shape to allow it to pivot against the panel hook platform 147a. In this example, the catch clamp assembly 121 is secured to the leading edge of the second solar panel 102. The hook arm 148a extends from the panel hook bracket 148 of the catch clamp assembly 121. The open end 148d, can be a ball hook catch as illustrated. The open end 148d of the hook arm 148a engages the hook receiver 147d of the mid clamp bracket assembly 145, securing the second solar panel assembly 120 to the first solar panel assembly 110. This is described in more detail in the discussion of the assembly process. The catch clamp assembly, the mid clamp assembly, and the end clamp assembly will be discussed in greater detail in FIGS. 59-61, FIGS. 62-64, and FIGS. 65-67, respectively.

Referring to FIG. 1, for simplicity, the solar panel array 100 is illustrated with six solar panels. The disclosed solar panel assembly can include more solar panels along with associated end clamp mounting assemblies, mid clamp mounting assemblies, and catch clamp assemblies. As discussed in the Background, a 1 MW (1000 kW) commercial system could include 2000 solar panels. The devices and assembly methods described in this Detailed Description are scalable to even larger systems. An installer can extend the length of a column within the array as required. For example, referring to FIG. 3, starting with the first solar panel assembly 110 as the leading edge of column 107, the installer can extend column 107 by adding instances of the second solar panel assembly 120 without limit.

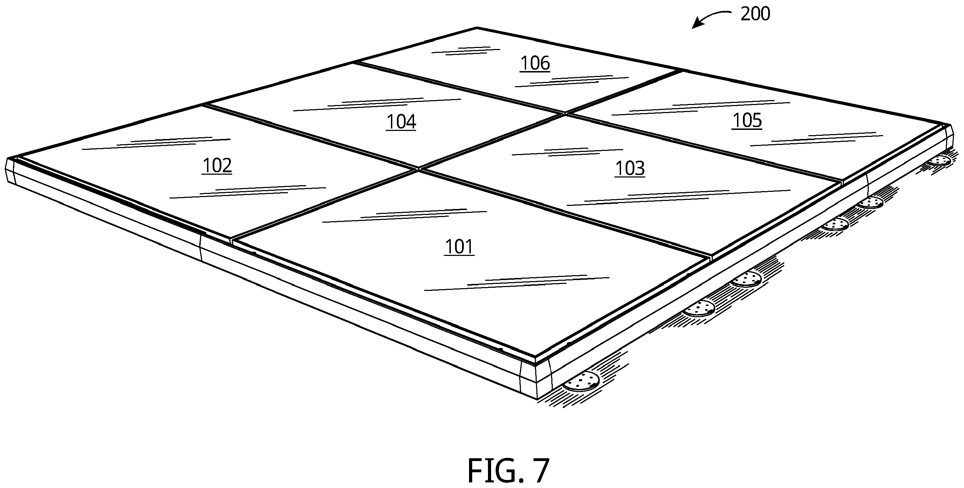

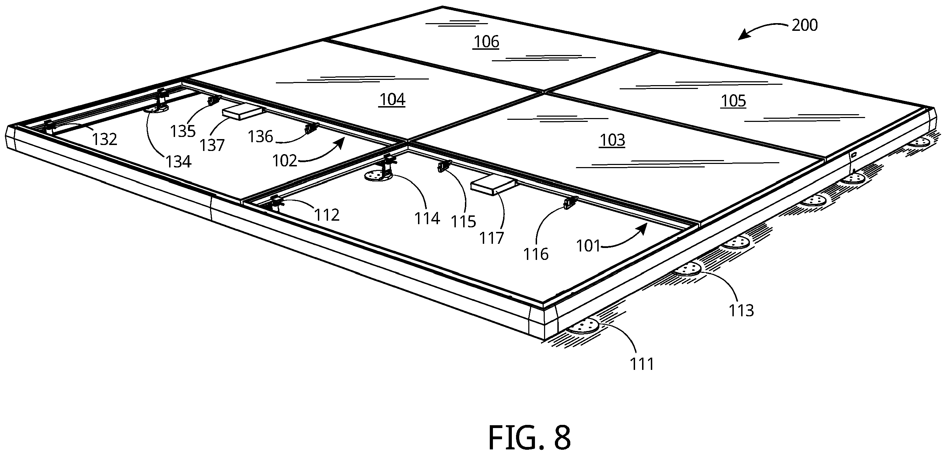

An advantage of the systems, devices, and methods described in this disclosure is the installer can mount solar panels in landscape or portrait orientation. In either orientation, the assembly procedure is similar. The solar panel array 100 in FIGS. 1 and 2 is an example of landscape orientation. The width of the columns 107, 108 extends along the long sides of their respective solar panels. The mid clamp, end clamp, and catch clamp assemblies are attached along these long sides. FIGS. 7 and 8 illustrate the solar panel array 200 that includes the first solar panel 101, the second solar panel 102, the third solar panel 103, and solar panels 104, 105,106 arranged in portrait orientation as three columns and two rows. In FIG. 8, the solar cells and their glass cover and substrates are removed from the first solar panel 101 and the second solar panel 102 to reveal solar panel mounting assemblies and accessories hidden from view. Referring to FIG. 8, the end clamp assemblies 111, 113 are secured to the leading edge of the first solar panel 101. The mid clamp assemblies 112, 114 are secured to the trailing edge of the first solar panel 101. The end clamp assemblies 132, 134 are secured to the trailing edge of the second solar panel 102. The catch clamp assemblies secured to the leading edge of the second solar panel 102 are hidden from view. The leading and trailing edges are along the widthwise sides of the solar panels. FIG. 8 also shows optional accessories: These optional accessories include the wire management clips 115, 116 and the MLPE 117 secured to the first solar panel 101 and the wire management clips 135, 136, and the MLPE 137 secured to the second solar panel 102.

### Examples

FIGS. 9-53 show examples of the assembly process of a column of the solar panel array 100 of FIG. 1. For simplicity, the process shows how to assemble a three-panel column. Using the procedure that follows, an installer can extend the number of panels in a column and the number of columns in an array without limit.

FIG. 9 illustrates an overview of the assembly method. In step 150, the installer pre-attaches, at the job site, solar panel clamp assemblies, catch clamp assemblies, and optionally solar panel accessories to their respective solar panels. The solar panel clamp assemblies, catch clamp assemblies, and solar panel accessories can be preassembled to the solar panel on the ground, a work surface, or on the building surface, such as a roof. In this example, the first solar panel assembly in a column is located on the leading edge of the column. This solar panel assembly can include a solar panel with end clamp and mid clamp assemblies secured to the solar panel's leading edge and trailing edge, respectively. The second and subsequent solar panel assemblies include a solar panel, catch clamp and mid clamp assemblies attached to the solar panel's leading edge and trailing edge, respectively. The last solar panel assembly in the column, i.e., the solar panel assembly on the column's trailing edge, can include end clamp assemblies instead of mid clamp assemblies on the solar panel's trailing edge.

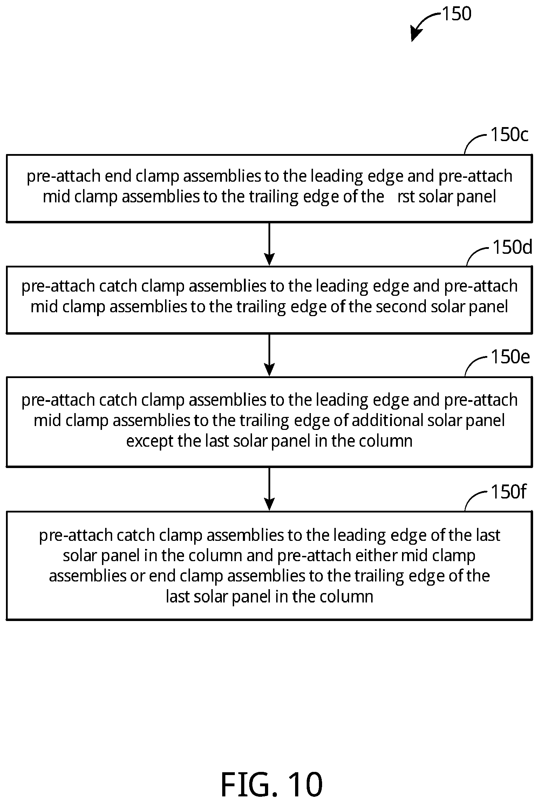

FIG. 10 illustrates step 150 in more detail. In step 150c, the installer pre-attaches end clamp assemblies and mid clamp assemblies to the first solar panel's leading edge and trailing edge, respectively. In step 150d, the installer pre-attaches catch clamp and mid clamp assemblies to the second solar panel's leading edge and trailing edge, respectively. In step 150e, the installer similarly pre-attaches catch clamp and mid clamp assemblies to the leading edge and trailing edge of additional solar panels in the column except the final solar panel. In step 150f, the installer pre-attaches catch clamp assemblies to the last solar panel's leading edge and can attach mid clamp assemblies or end clamp assemblies to the last solar panel's trailing edge.

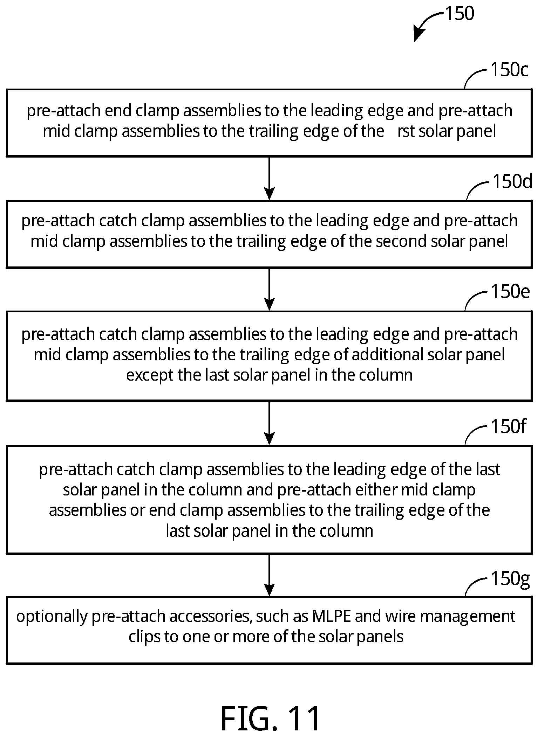

The installer can optionally pre-attach accessories such as an MLPE or one or more wire management clips to the solar panel frame. FIG. 11 depicts an alternative version of step 150 from FIG. 9, where in step 150g, the installer can optionally pre-attach accessories such as an MLPE or wire management clips to one or more of the solar panels. The other steps in FIG. 11, step 150c, step 150d, step 150e, and step 150f remain as described in FIG. 10.

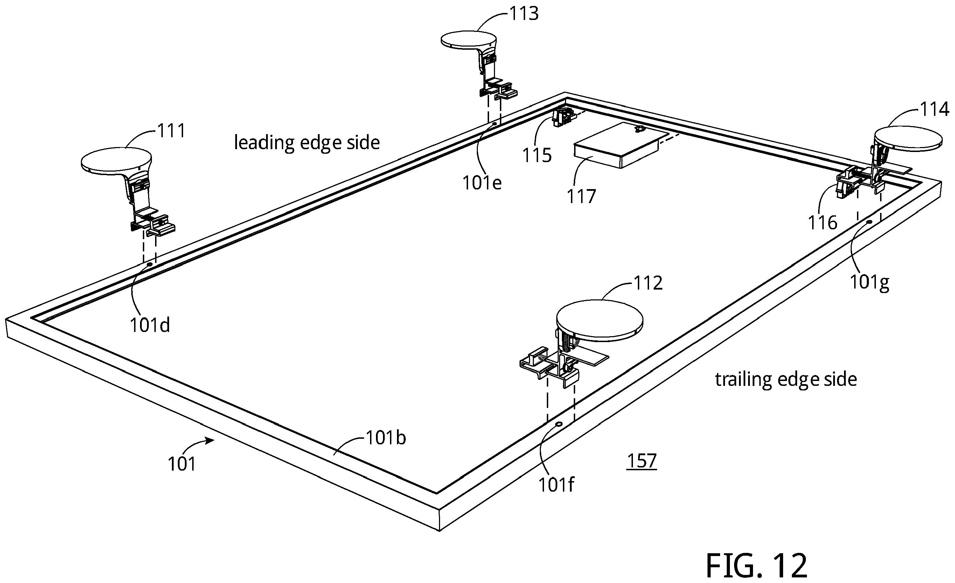

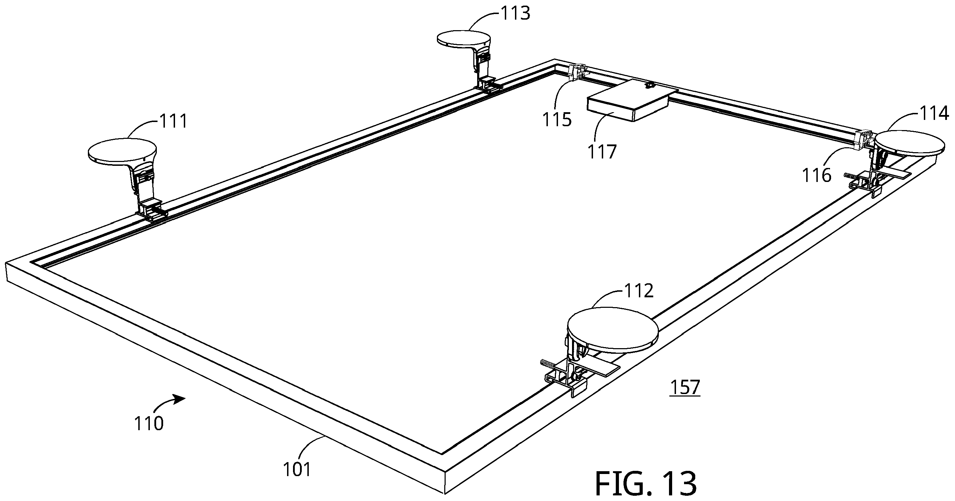

FIGS. 12 and 13 illustrate an example of step 150c of FIG. 10. FIG. 12, illustrates solar panel clamp assemblies attaching to the first solar panel 101. These solar panel assemblies include the end clamp assemblies 111, 113 and mid clamp assemblies 112, 114 attaching to the leading edge and trailing edge, respectively, of the return flange 101b of first solar panel 101. FIG. 13 illustrates the completed assembly, the first solar panel assembly 110, which includes the first solar panel 101, the end clamp assemblies 111, 113 and the mid clamp assemblies 112, 114. FIGS. 14 and 15 illustrate an example of step 150d of FIG. 10. In FIG. 14, the catch clamp assemblies 121, 123 are in the process of attaching to the leading edge of the second solar panel 102. Solar panel clamp assemblies, i.e., mid clamp assemblies 122, 124, are in the process of attaching to the trailing edge of the second solar panel 102. FIG. 15 shows the resulting completed assembly, second solar panel assembly 120, which includes the second solar panel 102, catch clamp assemblies 121, 123, and mid clamp assemblies 122, 124. FIGS. 16 and 17 illustrate an example of step 150fof FIG. 10. In FIG. 16, catch clamp assemblies 131, 133 are in the process of attaching to the leading edge of the last solar panel in the column, which in FIG. 16 is the third solar panel 103. Solar panel clamp assemblies, i.e., the end clamp assemblies 132, 134, are in the process of attaching to the trailing edge. FIG. 17, shows the resulting completed assembly, the third solar panel assembly 130. The third solar panel assembly 130 includes the third solar panel 103, the catch clamp assemblies 131, 133, and the end clamp assemblies 132, 134.

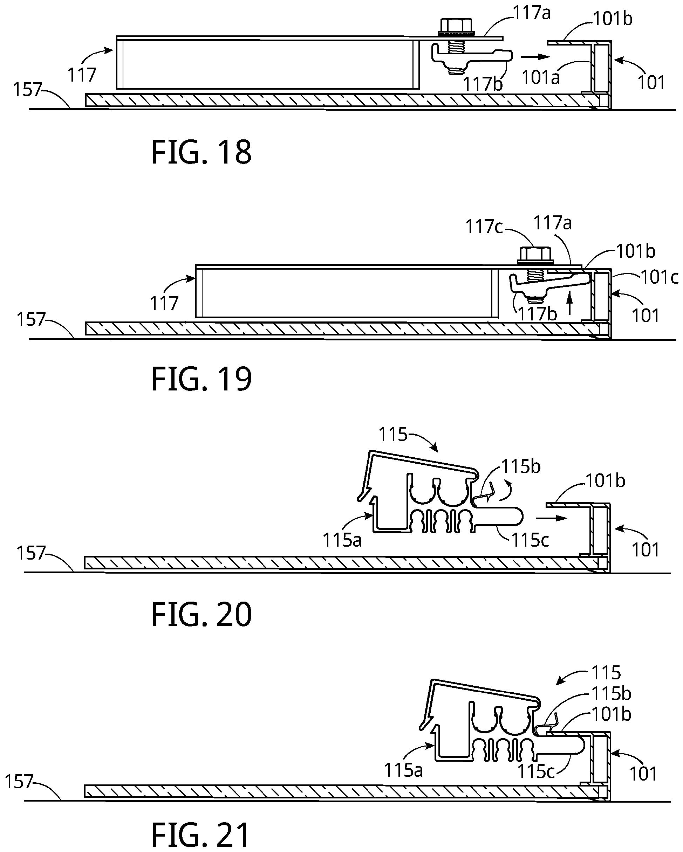

FIGS. 18-21 illustrate an example of step 150g in FIG. 11. In FIGS. 18 and 19, the MLPE 117 is attached to the return flange 101b and the solar panel frame 101c of the first solar panel 101. In FIGS. 20 and 21, a wire management clip 115 is attached to the return flange 101b of the first solar panel 101. In FIG. 18, the installer slides the mounting plate 117a of the MLPE 117 over the outside-facing surface of the return flange 101b. The installer slides the swivel clamp body jaw 117b under the inside-facing surface of the return flange 101b. The installer may optionally rotate the swivel clamp body jaw 117b. In FIG. 19, with the return flange 101b positioned between the swivel clamp body jaw 117b and the mounting plate 117a, the installer tightens the threaded fastener 117c to secure the MLPE 117 to the first solar panel 101.

Referring to FIGS. 20 and 21, the wire management clip 115, as illustrated, includes a wire clip body 115a and a spring clip 115b. In FIG. 20 the installer pulls back the spring clip 115b and slides it over the outside face of the return flange 101b, while sliding the panel retainer 115c under the inside-facing surface of the return flange 101b. In FIG. 21, the installer releases the spring clip 115b, which clamps the panel retainer 115c to the return flange 101b. FIGS. 12 and 13 also illustrate the process of attaching the wire management clips 115, 116, and the MLPE 117. FIGS. 14 and 15 show the process of attaching wire management clips 125, 126, and the MLPE 127. FIGS. 16 and 17 show the process of attaching the wire management clips 135, 136, and the MLPE 137.

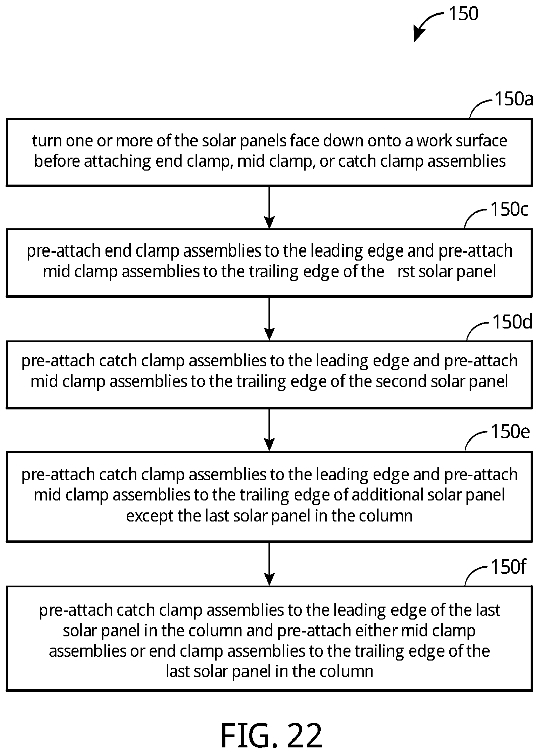

The mid clamp, end clamp, catch clamp assemblies are structured to allow the installer to install them while the solar panels are face down or on their side. FIG. 22 shows an alternative version of step 150 of FIG. 9 with the addition of step 150a. The other steps of FIG. 22, step 150c, step 150d, step 150e, and step 150f are the same as in FIG. 10. Referring to FIG. 22, in step 150a, the installer places or turns the solar panels face down and rests the front of the solar panel onto a work surface before installing the end clamp, mid clamp, and catch clamp assemblies. As an example, the first solar panel 101 in FIGS. 12 and 13, the second solar panel 102 in FIG. 14 and 15, and the third solar panel 103, in FIGS. 16 and 17, are positioned face down against a work surface 157 at the job site. The first solar panel 101 in FIGS. 18-21 are positioned face down against the work surface 157 at the job site. The work surface 157 can be the ground, a work bench, or the building or roof surface, for example roof 140 of FIG. 4.

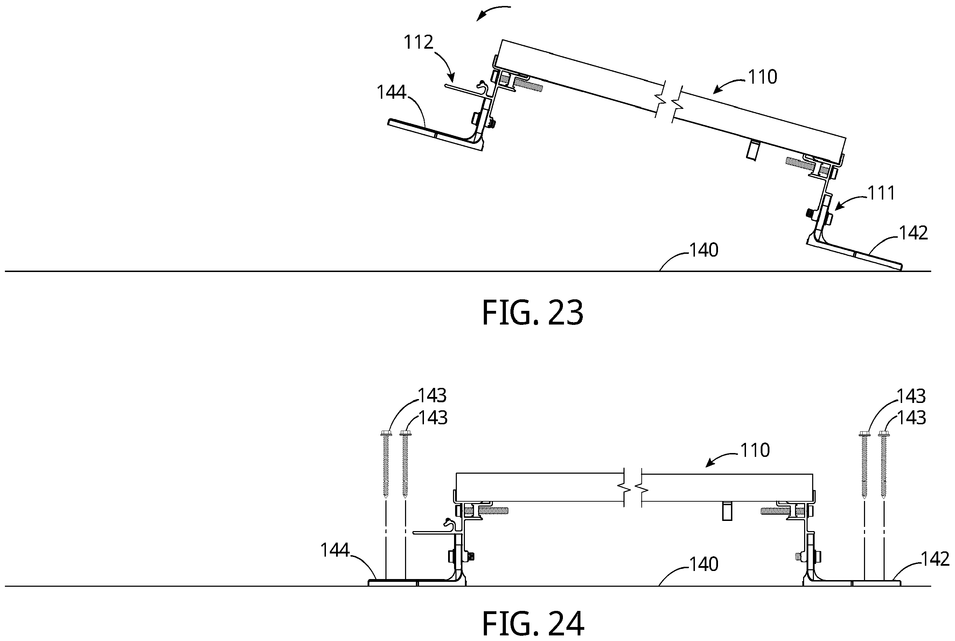

Referring to FIG. 9, in step 151, the installer places the first solar panel assembly on the building surface and secures it. An example of this illustrated in FIGS. 23 and 24. The installer places the L-foot 142 of an end clamp assembly 111 of the first solar panel assembly 110 on the roof 140. The first solar panel assembly 110 is then rotated to place the L-foot 144 of the mid clamp assembly 112 onto the roof 140. The installer could also place the panel straight down. The installer could slide it into place. In FIG. 24, the installer secures the first solar panel assembly 110 to the roof 140 using multiple instances of threaded fastener 143 through the L-foot 142 and the L-foot 144.

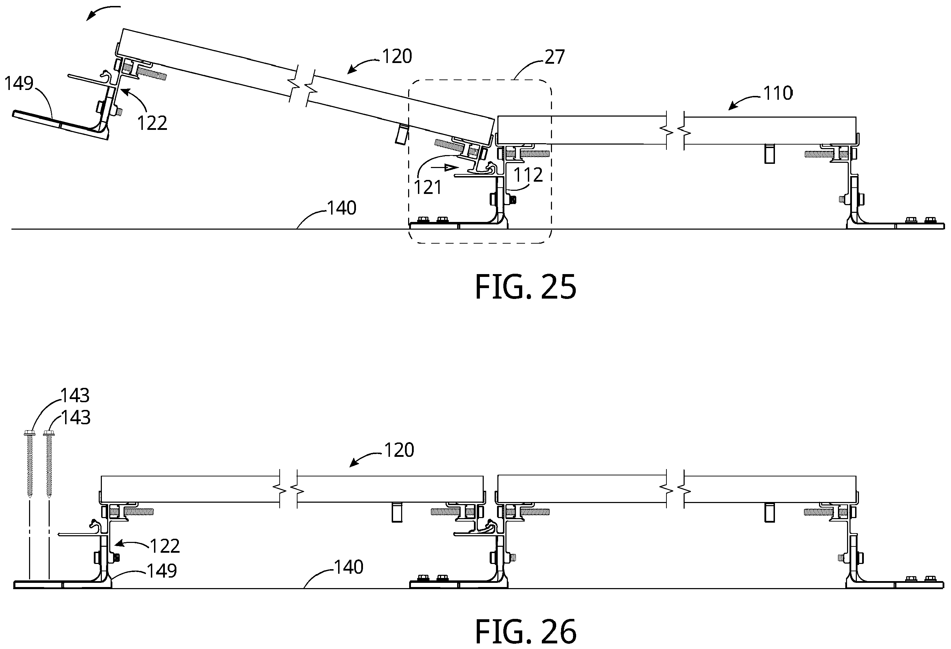

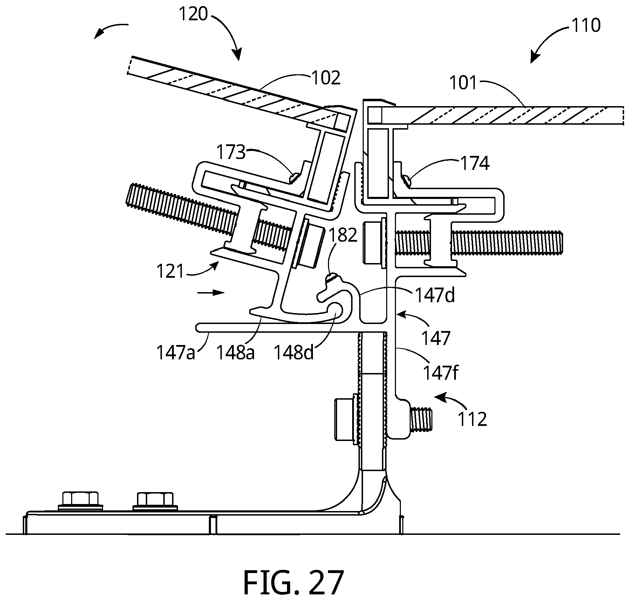

Referring to FIG. 9, in step 152, the installer secures the second solar panel assembly to the first solar panel assembly. The installer does this by engaging the catch clamp assemblies on the leading edge of the second solar panel assembly with correspondingly-positioned mid clamp assemblies on the trailing edge of the first solar panel assembly. This is shown, by example in FIGS. 25 and 27. In FIG. 25, with the first solar panel assembly 110 attached to the roof 140, the installer engages the catch clamp assembly 121 of the second solar panel assembly 120 with the mid clamp assembly 112 of the first solar panel assembly 110. The installer then pivots the second solar panel assembly 120 until the L-foot 149 of the mid clamp assembly 122 rests against the roof 140. Referring to FIG. 27, the open end 148d of the hook arm 148a of the catch clamp assembly 121 engages the hook receiver 147d of the mid clamp bracket 147 of the mid clamp assembly 112. At the same time the bottom of the hook arm 148a, acting as a seating platform pivots against the panel hook platform 147a of the mid clamp bracket 147 because of its generally curved-shaped seating surface. Here, the generally curve-shaped seating surface includes a downward-facing generally convex shape. The open end 148d is illustrated as a ball hook catch. The hook receiver 147d, as illustrated, includes a generally concave-shaped interior and is so shaped to create a rotational stop for the open end 148d. For example, the end portion of the hook receiver is angled sufficiently at an acute angle to prevent the open end 148d and hook arm from rotating further counterclockwise. The hook receiver 147d includes an end portion extending toward the panel hook platform 147a. The hook arm 148a, the open end 148d, and the hook receiver 147d could, as an alternative, be structured as a tongue and groove, a tab and slot, or a hook and slot. For example, a slot-shaped opening in the pedestal 147f could replace the hook receiver 147d. The open end 148d could be shaped for the slot-shaped opening to capture and retain it. For example, the open end 148d could be shaped like a tab or a hook.

Bonding screws help create electrical continuity between the solar panel frames and the racking system. For example, in FIG. 27, the sharp tip of threaded fastener 173 electrically bonds the catch clamp assembly 121 to the second solar panel 102. The sharp tip of threaded fastener 174 electrically bonds the mid clamp assembly 112 to the first solar panel 101. The electrical bonding between the two solar panel assemblies, the first solar panel assembly 110 and the second solar panel assembly 120 is completed by threaded fastener 182. The sharp tip of threaded fastener 182, presses against the open end 148d, here as a ball hook catch, to electrically bond the catch clamp assembly 121 to the mid clamp assembly 112.

Referring to FIG. 9, in step 153, the installer then secures the mid clamp assembly on the trailing edge of the second solar panel to the building surface. As an example, in FIG. 26, with the mid clamp assembly 122 resting against the roof 140, the installer secures the L-foot 149 of the mid clamp assembly 122 using multiple instances of threaded fastener 143. The mid clamp assembly 122 is attached to the trailing edge of second solar panel assembly 120. Referring to FIG. 9, in step 154 and step 155, the installer repeats the procedure for the rest of the panels in that column of the solar panel array. In this example, the column is column 107 of solar panel array 100, illustrated in FIG. 1.

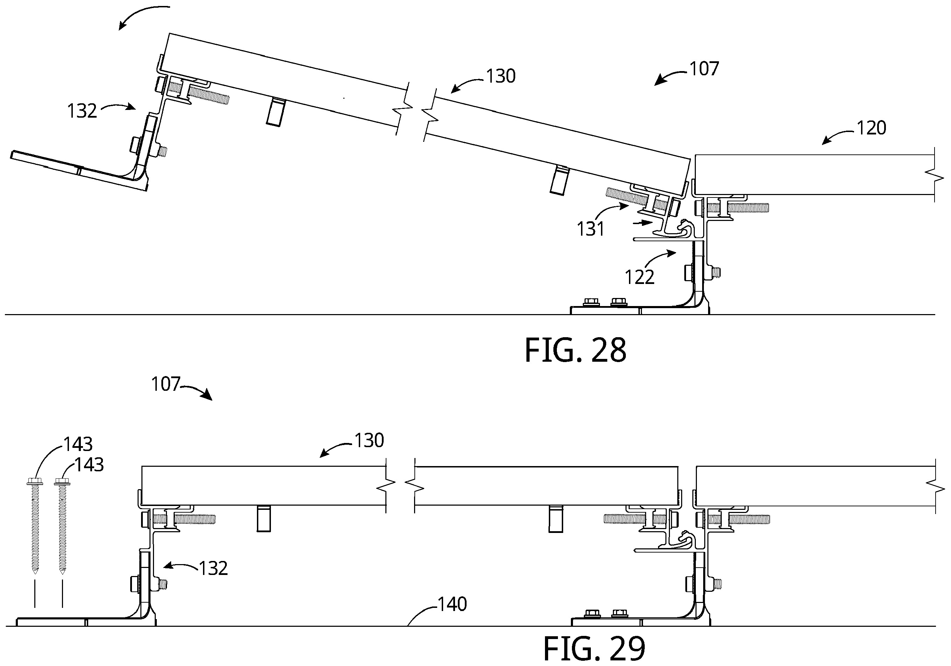

The last solar panel in the column can use mid clamp or end clamp assemblies on their trailing edge. As an example, in FIGS. 28 and 29, the last solar panel assembly in column 107, which in FIGS. 28 and 29 is the third solar panel assembly 130, has the end clamp assembly 132 on its trailing edge. In FIG. 28, the catch clamp assembly 131 engages the mid clamp assembly 122 of the second solar panel assembly 120. This is similar to what was described above for FIGS. 25 and 27. In FIG. 29, the end clamp assembly 132 is secured to the roof 140 by threaded fasteners; for example, by multiple instances of threaded fastener 143.

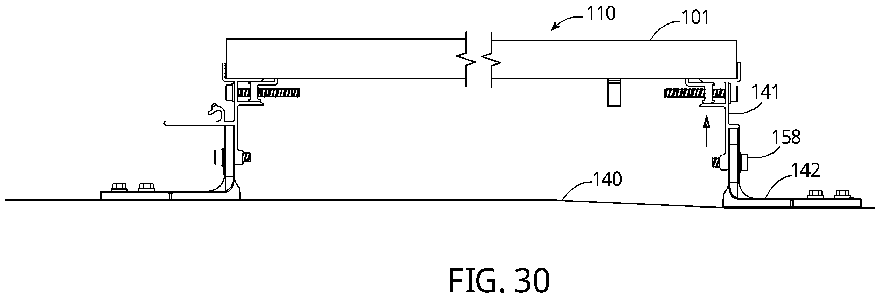

The end clamp and mid clamp assemblies can optionally be height adjusted to compensate for uneven building or roof surfaces. For example, FIG. 30 illustrates height adjustment for the first solar panel assembly 110. The same principle applies to the second and subsequent solar panel assemblies. With threaded fastener 158 loosened, the end clamp bracket assembly 141 can move relative to the L-foot 142, which causes the first solar panel 101 to move up and down in reference to the roof 140.

The following are some of the advantages of the methods discussed. First, the installer pre-attaches the mid clamp assemblies, end clamp assemblies, and catch clamp assemblies to the solar panels at the job site. The installer pre-attaches the solar panel clamp assemblies and catch clamp assemblies to the solar panels and then simply places the resulting solar panel assemblies on the roof or building surface. Solar panel assemblies within a column will naturally align with the previous solar panel assemblies. This eliminates complex pre-measurements required for typical rail-less systems where brackets are pre-attached to a roof and solar panels are then attached to the roof-attached brackets.

Second, because an installer can assemble the solar panel assemblies in columns, the installer can easily and quickly align subsequent columns to the previous column.

Third, the installer can attach the second and subsequent solar panel assemblies to their adjacent solar panel assembly without tools. The catch clamp assembly can engage the mid clamp assembly of the adjacent solar panel assembly by a catch and catch receiver. From FIG. 27, the catch can be the hook arm 148a with open end 148d. The catch receiver can be hook receiver 147d. In general, the catch and catch receiver can also be a hook and slot, tab and slot, tongue and groove, or similar mechanism. A seating platform extending from the catch clamp allows the installer to pivot the solar panel assembly while engaging the catch and catch receiver. The seating platform is a generally curved-shaped seating surface and can have a downward-facing generally convex shape.

Fourth, the installation of the solar panel clamp assemblies (i.e., the mid clamp and end clamp assemblies) can be carried out without positionally adjusting the them lengthwise or widthwise with respect to their respective solar panels.

Fifth, the installer can consistently position and align mid clamp assemblies, catch clamp assemblies, and end clamp assemblies along the solar panel frame without measurement. This saves time, labor, and measurement error. How this is achieved is discussed below.

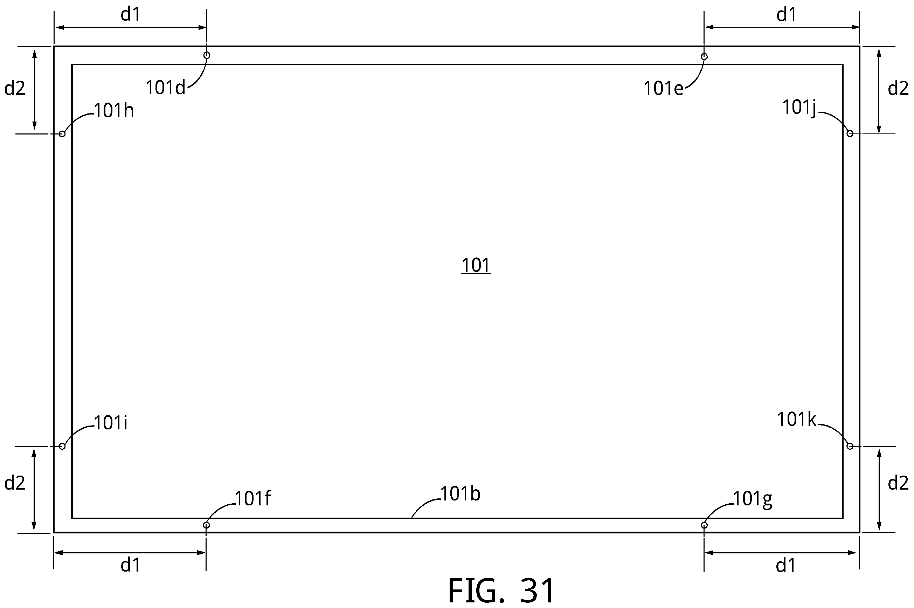

Solar panel manufacturers generally place manufacturer-provided mounting holes along the lengthwise sections of the return flange of the solar panel frames. They optionally place manufacturer-provided mounting holes along the widthwise sections. The manufacturer-provided mounting holes are consistently positioned within the same solar panel manufacturer and model. For example, FIG. 31 illustrates the first solar panel 101. Manufacturer-provided mounting holes 101d, 101e, 101f, 101g are positioned along the lengthwise sections of the return flange 101b a distance d1 from their closest widthwise sides. Manufacturer-provided mounting holes 101h, 101i, 101j, 101k are positioned along the widthwise sections of the return flange 101b a distance d2 from their closest lengthwise sides. The inventor observed these manufacturer-provided mounting holes could align the solar panel clamp assemblies and catch clamp assemblies consistently within a solar panel array if the installer used the same solar panel manufacturer and model throughout the column. This has the advantage of allowing the installer to make sure that mid clamp assemblies align with catch clamp assemblies without measurement. This also assures that the installer can consistently position the mid clamp assemblies or end clamp assemblies mounted on the outside of the solar panel array.

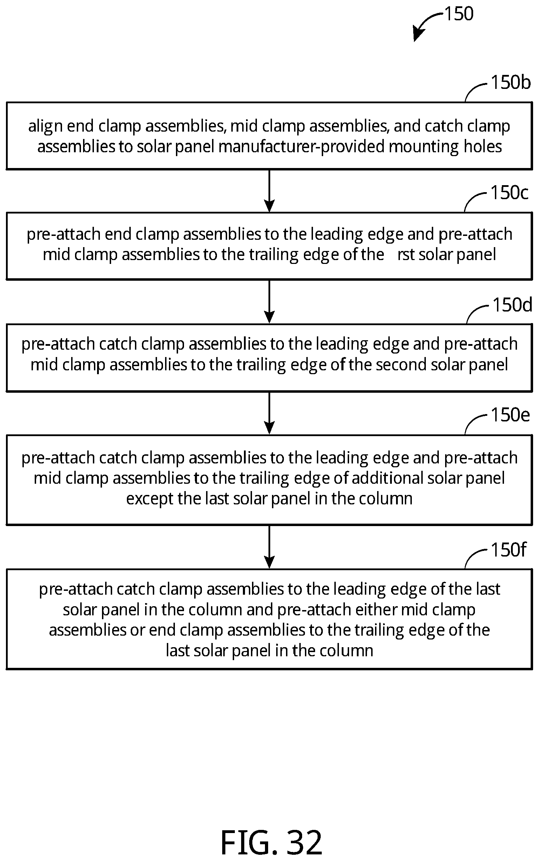

FIG. 32, depicts an alternative version of step 150 from FIG. 9, where in step 150b, the installer can optionally align the end clamp, mid clamp, and catch clamp assemblies to the manufacturer-provided mounting holes in the return flange provided by solar panel manufacturer. The other steps, step 150c, step 150d, step 150e, and step 150f remain as described. FIG. 12 illustrates the end clamp assemblies 111, 113 and the mid clamp assemblies 112, 114, aligned to the manufacturer-provided mounting holes 101d, 101e, 101f, 101g, respectively. The manufacturer-provided mounting holes are positioned in the return flange 101b. FIG. 14 illustrates the catch clamp assemblies 121, 123 and the mid clamp assemblies 122, 124 aligned to the manufacturer-provided mounting holes 102d, 102e, 102f, 102g, respectively, positioned in the return flange 102b. FIG. 16 illustrates the catch clamp assemblies 131, 133 and the end clamp assemblies 132, 134 aligned to the manufacturer-provided mounting holes 103d, 103e, 103f, 103g, respectively, positioned in the return flange 103b.

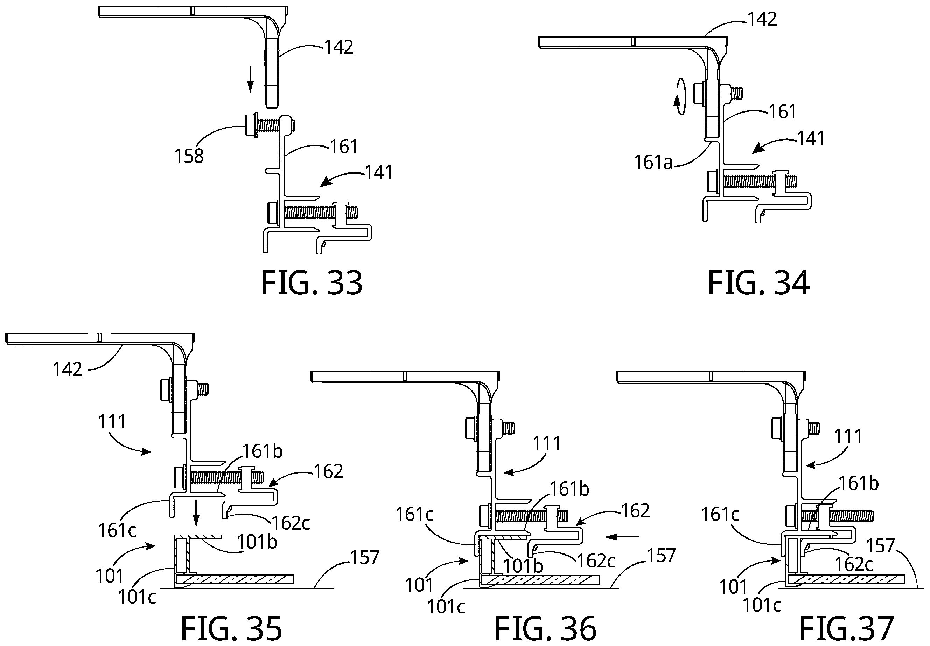

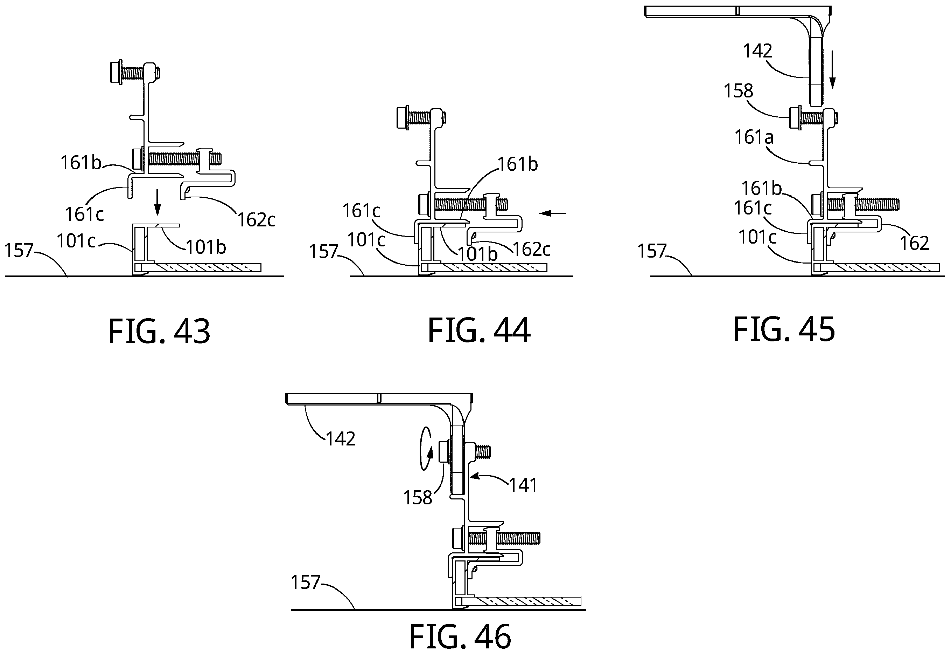

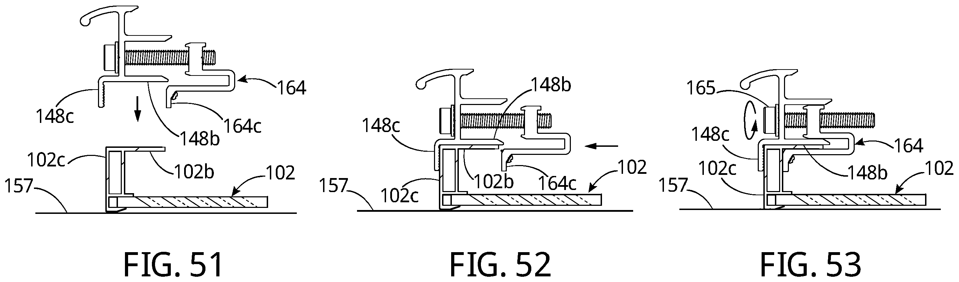

FIGS. 33-37 and FIGS. 38-42 illustrate sequences of attaching an end clamp assembly and mid clamp assembly, respectively, to a solar panel resting face down on a work surface. FIGS. 43-46 and FIGS. 47-50 illustrate alternative sequences of attaching an end clamp assembly and a mid clamp assembly, respectively, to a solar panel resting face down on a work surface. FIGS. 51-53 illustrate an assembly sequence for attaching catch clamps to the second solar panel 102. In FIGS. 35-37, 40-42, 43-46, 47-50, and 51-53, the solar panels are shown resting face down against the work surface 157 at the job site.

Now we will discuss the sequence of attaching the end clamp to the solar panel in FIGS. 33-37. Referring to FIGS. 35-37, in this example we depict attaching the end clamp assembly 111 to the first solar panel 101. In FIG. 33, the L-foot 142 is slid over the threaded fastener 158. The threaded fastener 158 is threadedly secured to the end clamp bracket 161 of the end clamp bracket assembly 141. Referring to FIG. 34, to assure consistent height between the end clamp and mid clamp assemblies without measurement, the top of the L-foot 142 can rest against the height-adjustment stop 161a of the end clamp bracket 161, before securing the L-foot 142 to the end clamp bracket assembly 141. In FIGS. 35 and 36, with the clamp jaw face 162c of the clamp jaw 162 positioned sufficiently away from the panel stop 161c to clear the return flange 101b, the installer positions the panel stop 161c against the outside face of the solar panel frame 101c. And the installer positions the solar panel platform 161b against the return flange 101b. With the panel stop 161c and the solar panel platform 161b in position, in FIG. 37, the installer tightens the clamp jaw face 162c against the inside face of the solar panel frame 101c.

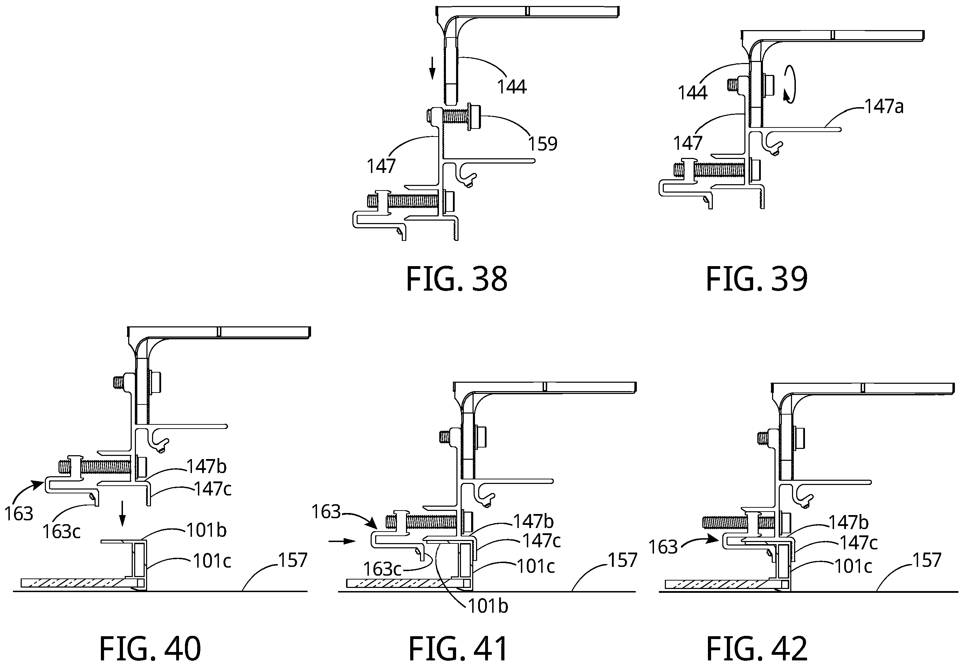

The sequence of attaching the mid clamps to the solar panel is similar to the sequence described in the last paragraph. In FIG. 38, the L-foot 144 is slid over the threaded fastener 159 secured to mid clamp bracket 147. Referring to FIG. 39, to assure consistent height between end clamp and mid clamp assemblies, the top of the L-foot 144 can rest against the bottom of the panel hook platform 147a before securing the L-foot 144 to the mid clamp bracket 147. In FIGS. 40 and 41, with the clamp jaw face 163c of the clamp jaw 163 positioned sufficiently away from the panel stop 147c to clear the return flange 101b, the installer positions the panel stop 147c against the outside face of the solar panel frame. And the installer positions the solar panel platform 147b against the return flange 101b. With the panel stop 147c and the solar panel platform 147b in position, in FIG. 42, the installer tightens the clamp jaw 163 against the inside face of the solar panel frame 101c.

The installer may opt to secure end clamp bracket assemblies to the solar panel before securing the L-feet. FIGS. 43-46 illustrates an example of this sequence. In FIGS. 43 and 44, with the clamp jaw face 162c positioned sufficiently away from the panel stop 161c to clear the return flange 101b, the installer positions the panel stop 161c against the outside face of the solar panel frame 101c. And the installer positions the solar panel platform 161b against the return flange 101b. With panel stop 161c and solar panel platform 161b in position, in FIG. 45, the installer tightens the clamp jaw 162 against the inside face of the solar panel frame 101c and slides the L-foot 142 over the threaded fastener 158 to the desired position. The L-foot 142 is slid against the height-adjustment stop 161a. In FIG. 46, the installer secures the L-foot 142 to the end clamp bracket assembly 141 by tightening the threaded fastener 158.

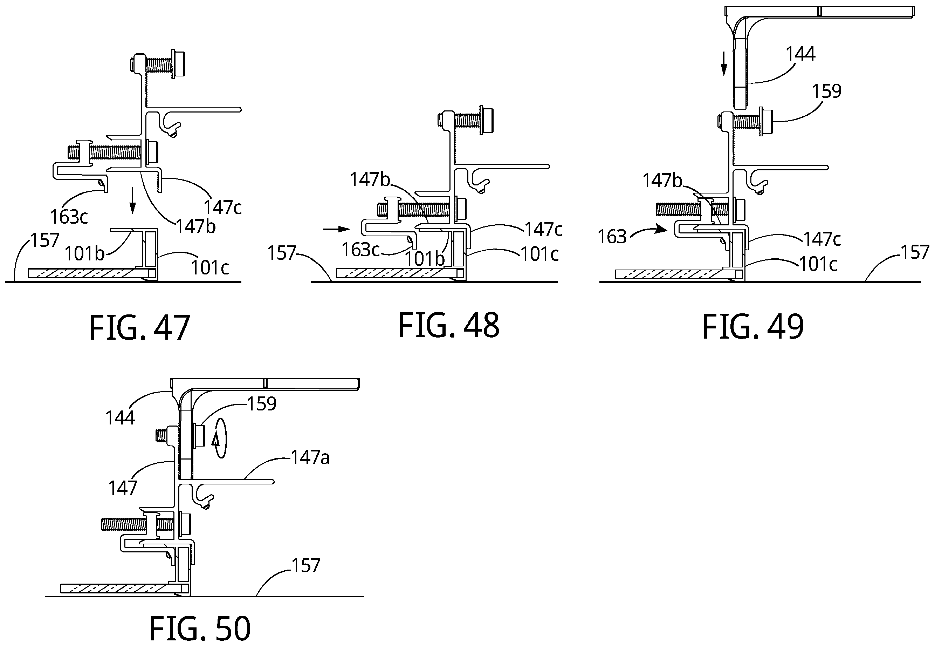

The sequence for the mid clamp, illustrated in FIGS. 47-50 is similar to what was described in the last paragraph. In FIGS. 47 and 48, with the clamp jaw face 163c positioned sufficiently away from the panel stop 147c to clear the return flange 101b, the installer positions the panel stop 147c against the outside face of the solar panel frame 101c. And the installer positions the solar panel platform 147b against the return flange 102b. With the panel stop 147c and the solar panel platform 147b in position, in FIG. 49, the installer tightens the clamp jaw 163 against the inside face of the solar panel frame 101c. The installer slides the L-foot 144 over the threaded fastener 159 to the desired position. Referring to FIG. 50, the L-foot 144 is slid against the bottom of the panel hook platform 147a. The installer secures the L-foot 144 to the mid clamp bracket 147 by tightening the threaded fastener 159.

The installer can pre-attach the catch clamp assemblies similarly to what was described directly above. FIGS. 51-53 illustrate an example of a sequence of pre-attaching the catch clamp assemblies to the second solar panel 102. In FIGS. 51 and 52, with the clamp jaw face 164c of the clamp jaw 164 positioned sufficiently away from the panel stop 148c to clear the return flange 102b, the installer positions the panel stop 148c against the outside face of the solar panel frame 102c. And the installer positions the solar panel platform 148b against the return flange 102b. With panel stop 148c and solar panel platform 148b in position, in FIG. 53, the installer tightens the clamp jaw 164 against the inside face of the solar panel frame 102c using the threaded fastener 165.

The installer can repeat the assembly process described above for other columns in the solar panel array. For example, column 108 of FIG. 1. The installer or reader can follow the same assembly procedure for assembling the columns in portrait-oriented solar panel arrays. This is another advantage of the described apparatus, devices, and methods.

After assembling the solar panel array, the installer can optionally install a skirt around the perimeter of the array. As discussed, FIGS. 1 and 7 show examples of solar panel arrays surrounded by skirt assemblies. We will use the solar panel array 100 of FIG. 1 for our example. With the solar panel array 100 secured to the roof, as in FIG. 2, FIGS. 54-56 show the sequence of attaching skirt bracket assemblies to the first solar panel 101. For simplicity, FIGS. 54-56 do not show the end clamps, mid clamps, and catch clamps. FIGS. 54-56 use the skirt bracket assembly 118 from FIG. 2. Referring to FIGS. 54 and 55, with the clamp jaw face 166c of the clamp jaw 166 positioned sufficiently away from the panel stop 167c of the skirt bracket 167 to clear the return flange 101b, the installer positions the panel stop 167c against the outside face of the solar panel frame 101c. And the installer positions the solar panel platform 167b against the return flange 101b. With the panel stop 167c and the solar panel platform 167b in position, in FIG. 56, the installer tightens the clamp jaw 166 against the inside face of the solar panel frame 101c using threaded fastener 168. The installer then repeats this sequence for both skirt bracket assemblies and skirt splice assemblies. Skirt bracket assemblies support skirt sections. Skirt splice assemblies support the ends of two adjacent skirt sections.

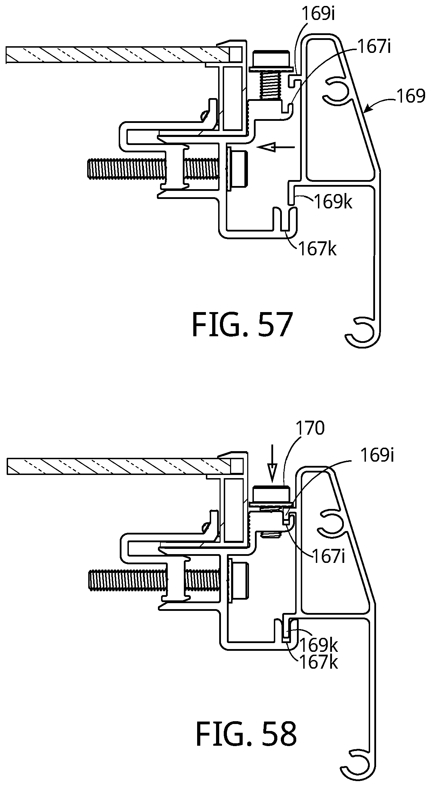

With the skirt bracket assemblies and skirt splice assemblies installed, the installer secures the skirt sections to skirt bracket and skirt splice assemblies. In FIG. 57, the installer positions a skirt section 169, so the upper tab 169i and the lower tab 169k of the skirt section 169 engage the upper slot 167i and the lower slot 167k, respectively, of the skirt bracket 167. In FIG. 58, the installer tightens a threaded fastener 170 to clamp the upper tab 169i to the upper slot 167i and to secure the lower tab 169k to the lower slot 167k.

### Components

FIGS. 59-61, 62-64, 65-67, 68-70, and 71-73 discuss the catch clamp assembly 121, the mid clamp assembly 112, the end clamp assembly 111, the skirt splice assembly 119, and the skirt bracket assembly 118, respectively, from the previous examples in more detail. These assemblies, as illustrated, share a common clamping mechanism that includes a clamp jaw and a bracket: clamp jaw 164 and panel hook bracket 148, clamp jaw 163 and mid clamp bracket 147, clamp jaw 162 and end clamp bracket 161, clamp jaw 171 and skirt splice bracket 172, clamp jaw 166 and skirt bracket 167, in FIGS. 59-61, 62-64, 65-67, 68-70, and 71-73, respectively.

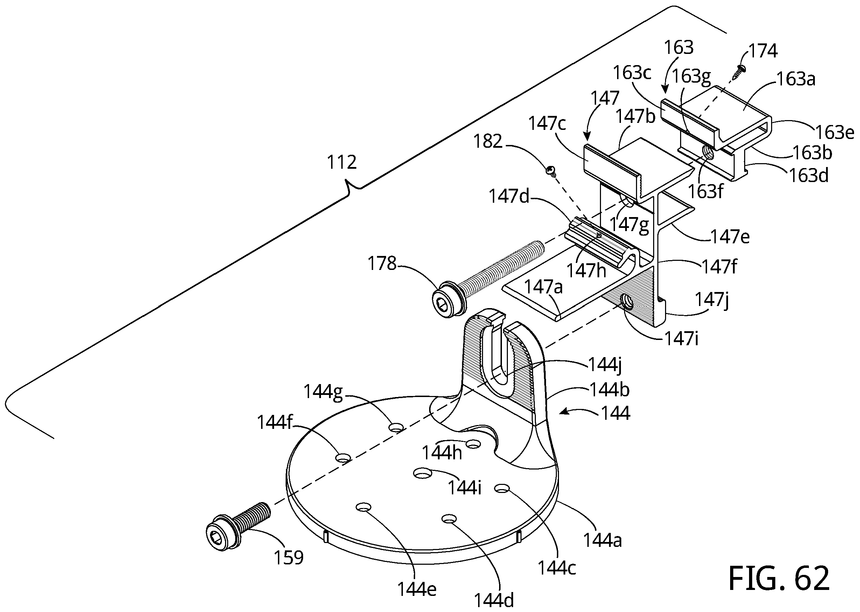

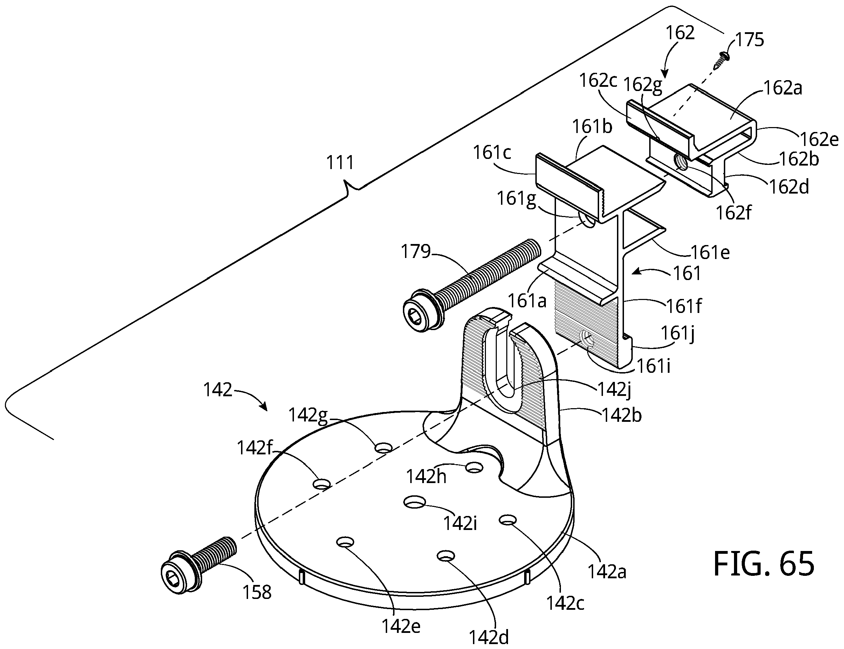

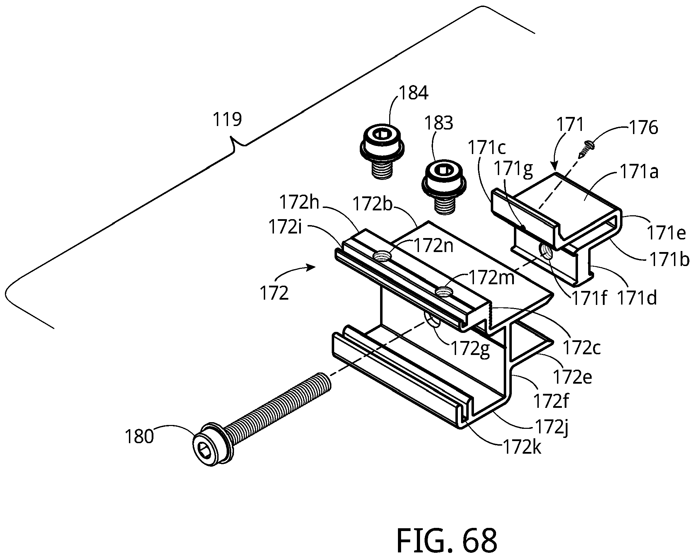

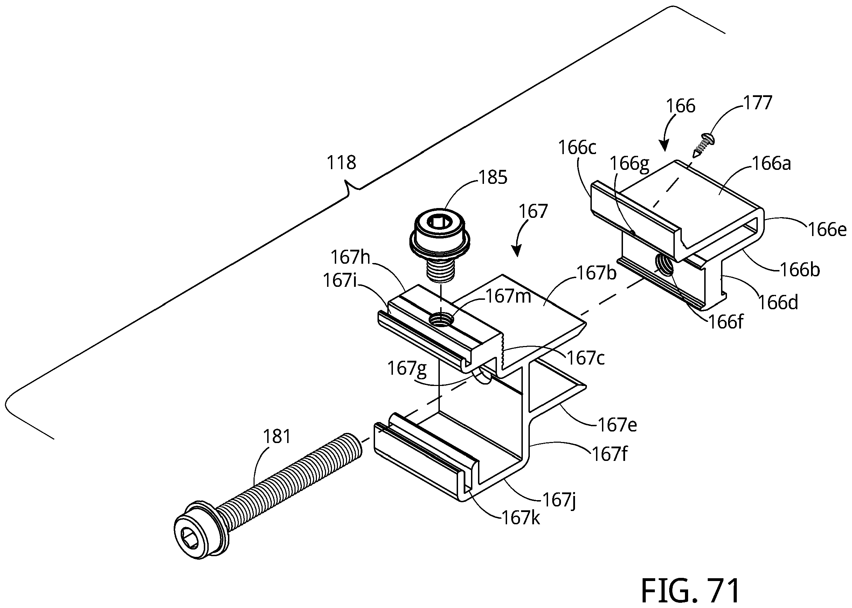

In the following two paragraphs, when components or elements are expressed as a list of five numbers, unless otherwise indicated, the first element in the list refers to FIGS. 59-61, the second element to FIGS. 62-64, the third element to FIGS. 65-67, the fourth element to FIGS. 68-70, and the fifth element to FIGS. 71-73. For example, clamp jaw 164, 163, 162, 171, 166 refers to clamp jaw 164 in FIGS. 59-61, clamp jaw 163 in FIGS. 62-64, clamp jaw 162 in FIGS. 65-67, clamp jaw 171 in FIGS. 68-70, and clamp jaw 166 in FIGS. 71-73.

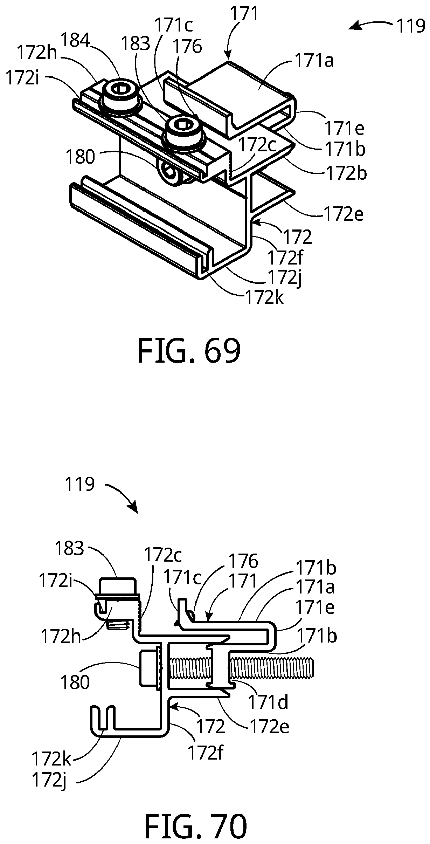

The clamp jaw 164, 163, 162, 171, 166 includes a c-shaped portion that includes an upper arm 164a, 163a, 162a, 171a, 166a, a lower arm 164b, 163b, 162b, 171b, 166b, spaced apart by an elbow 164e, 163e, 162e, 171e, 166e. A clamp jaw face 164c, 163c, 162c, 171c, 166c projects upward from the end of the upper arm 164a, 163a, 162a, 171a, 166a. A clamp jaw base 164d, 163d, 162d, 171d, 166d projects downward from the end of the lower arm 164b, 163b, 162b, 171b, 166b. A threaded aperture 164f, 163f, 162f, 171f, 166f (FIGS. 59, 62, 65, 68, and 71, respectively), projects through the clamp jaw base 164d, 163d, 162d, 171d, 166d. A threaded fastener 173, 174, 175, 176, 177 with a sharp or sharpened tip, such as a self-tapping screw or a sheet metal screw, threadedly engages and projects through an aperture 164g, 163g, 162g, 171g, 166g (FIGS. 59, 62, 65, 68, and 71, respectively), in the end of the clamp jaw face 164c, 163c, 162c, 171c, 166c. Note that clamp jaw base 171d is hidden from view in FIG. 69.

In FIGS. 59-61, the panel hook bracket 148 includes panel stop 148c, a solar panel platform 148b, a clamp jaw platform 148e, and a pedestal 148f. In FIGS. 62-64, the mid clamp bracket 147 includes panel stop 147c, a solar panel platform 147b, a clamp jaw platform 147e, and a pedestal 147f. In FIGS. 65-67, the end clamp bracket 161 includes panel stop 161c, a solar panel platform 161b, a clamp jaw platform 161e, and a pedestal 161f. In FIGS. 68-70, the skirt splice bracket 172 includes panel stop 172c, a solar panel platform 172b, a clamp jaw platform 172e, and a pedestal 172f. In FIGS. 71-73, the skirt bracket 167 includes panel stop 167c, a solar panel platform 167b, a clamp jaw platform 167e, and a pedestal 167f. The clamp jaw platform 148e, 147e, 161e, 172e, 167e projects away from the pedestal 148f, 147f, 161f, 172f, 167f. The pedestal 148f, 147f, 161f, 172f, 167f terminates into the solar panel platform 148b, 147b, 161b, 172b, 167b. The solar panel platform 148b, 147b, 161b, 172b, 167b forms the top of the pedestal 148f, 147f, 161f, 172f, 167f. The panel stop 148c, 147c, 161c, 172c, 167c projects upward from one end of the solar panel platform 148b, 147b, 161b, 172b, 167b. The clamp jaw face 164c, 163c, 162c, 171c, 166c is adjustably spaced apart from a panel stop 148c, 147c, 161c, 172c, 167c by a threaded fastener 165, 178, 179, 180, 181, that engages an aperture 148g, 147g, 161g, 172g, 167g (FIGS. 59, 62, 65, 68, and 71, respectively) in the pedestal 148f, 147f, 161f, 172f, 167f and threadedly engages a threaded aperture 164f, 163f, 162f, 171f, 166f (FIGS. 59, 62, 65, 69, and 71) in the clamp jaw base 164d, 163d, 162d, 171d, 166d. As the threaded fastener 165, 178, 179, 180, 181 is tightened or loosened, the clamp jaw base 164d, 163d, 162d, 171d, 166d moves between the solar panel platform 148b, 147b, 161b, 172b, 167b and the clamp jaw platform 148e, 147e, 161e, 172e, 167e, which changes the distance between the clamp jaw face 164c, 163c, 162c, 171c, 166c and the panel stop as the upper arm 164a, 163a, 162a, 171a, 166a and lower arm 164b, 163b, 162b, 171b, 166b move along the solar panel platform 148b, 147b, 161b, 172b, 167b.

Referring to FIGS. 59-61, the catch clamp assembly 121 includes a seating platform structured as a hook arm 148a with an open end 148d and a generally curve-shaped seating surface. The hook arm 148a is shown as a downward-facing generally convex shape. This downward-facing generally convex shape allows the hook arm 148a to pivot against the panel hook platform 147a (FIGS. 62-64). In FIGS. 59-61, the hook arm 148a extends from the bottom of the pedestal 147f. As discussed, the open end 148d is illustrated as a ball hook catch. The open end 148d can be other shapes that pair with a corresponding shape on the mid clamp assembly to create a catch and catch receiver pair. Examples of catch and catch receiver pairs include a hook and hook receiver, a hook and slot, a tab and slot, or a tongue and groove pair.

Referring to FIGS. 62-64, the panel hook platform 147a extends from the pedestal 147f below and in the opposite direction as the solar panel platform 147b. The hook receiver 147d extends from the panel hook platform 147a with its open end extending back toward the panel hook platform 147a to capture and secure the open end 148d, i.e., the ball hook catch, of the hook arm 148a from FIGS. 59-61. Threaded fastener 182 extends through aperture 147h (FIG. 62). The threaded fastener 182 includes a sharpened tip which lets it electrically bond with the open end 148d of the hook arm 148a from FIGS. 59-61.

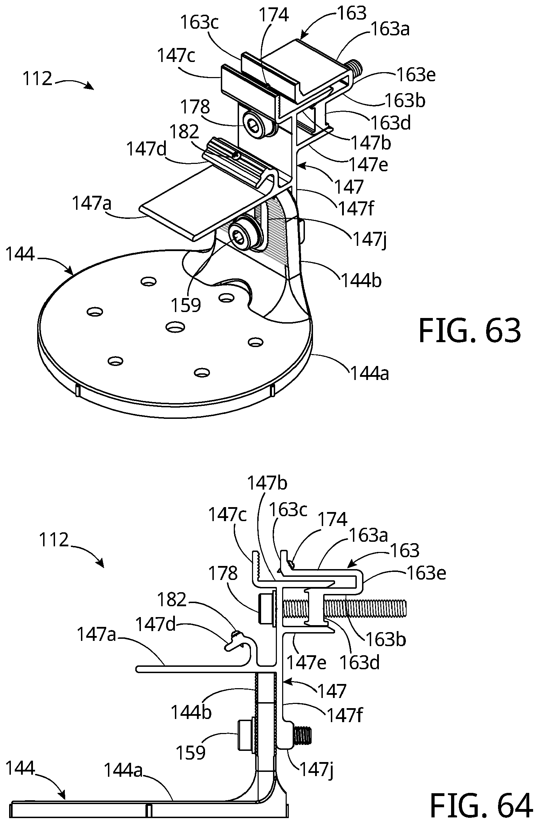

Continuing to refer to FIGS. 62-64, the L-foot 144 supports the solar panel assembly on the building structure. The L-foot 144 includes an L-foot base 144a and an L-foot riser 144b. Referring to FIG. 62, the L-foot 144 includes one or more apertures, here shown as apertures 144c, 144d, 144e, 144f, 144g, 144h, 144i that allow threaded fasteners, such as lag bolts, or deck screws, to threadedly engage the building structure. Referring to FIGS. 62 and 63, the L-foot riser 144b includes a slot-shaped opening 144j that is open at the top to allow the L-foot 144 to slide over the threaded fastener 159. For example, in FIG. 49, we discussed an assembly sequence where the L-foot 144 is slid over the threaded fastener 159. Referring to FIG. 62, the threaded fastener 159 engages threaded aperture 147i in the mid clamp bracket 147. The threaded aperture 147i can optionally extend into an abutment 147j to extend the threading and improve holding strength. The threaded fastener 159 and the abutment 147j is also illustrated in FIG. 64.

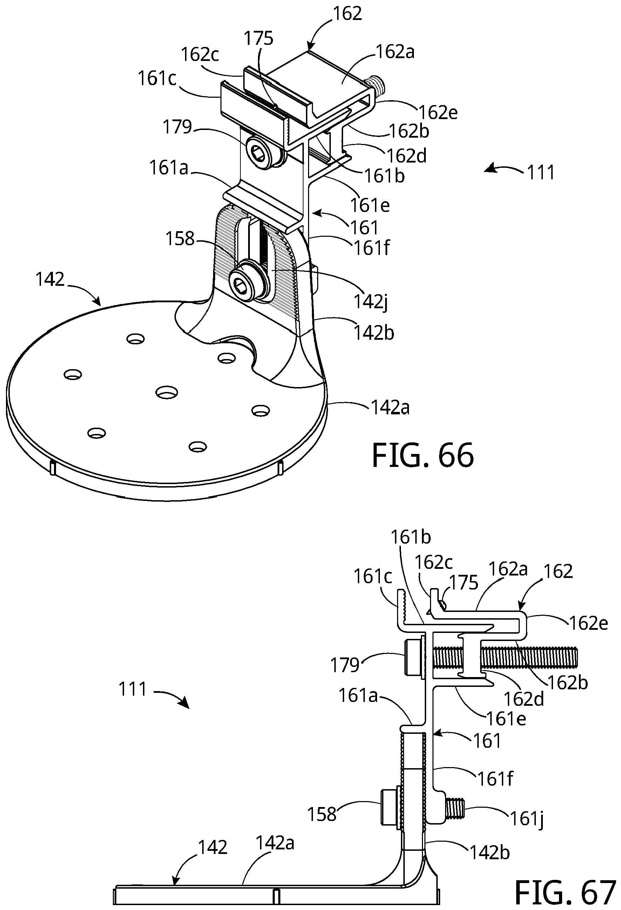

Referring to FIGS. 65-67, the height-adjustment stop 161a extends from the pedestal 161f below and in the opposite direction as the clamp jaw platform 161e. The L-foot 142 supports the solar panel assembly on the building structure. The L-foot 142 includes an L-foot base 142a and an L-foot riser 142b. Referring to FIG. 65, the L-foot 142 includes one or more apertures, here shown as apertures 142c, 142d, 142e, 142f, 142g, 142h, 142i that allow threaded fasteners, such as lag bolts, or deck screws, to threadedly engage the building structure. Referring to FIGS. 65 and 66, the L-foot riser 142b includes a slot-shaped opening 142j that is open at the top to allow the L-foot 142 to slide over the threaded fastener 158. For example, in FIG. 45, we discussed an assembly sequence where the L-foot 142 is slid over the threaded fastener 158. Referring to FIG. 65, the threaded fastener 158 engages threaded aperture 161i in the end clamp bracket 161. The threaded aperture 161i can optionally extend into an abutment 161j to extend the threading and improve holding strength. The threaded fastener 158 and the abutment 161j is also illustrated in FIG. 67.

Referring to FIGS. 68-70, and 71-73, the skirt splice assembly 119 and skirt bracket assembly 118, respectively, include similar structures. Comparing the two, the splice skirt clamp is longer widthwise and has two clamping fasteners instead of one to secure the ends of two skirt sections to the solar panel.

Referring to FIGS. 68-70, the skirt splice bracket 172 includes an upper arm 172h that extends away from the panel stop 172c in the opposite direction as clamp jaw platform 172e, and ending in an upper slot 172i. A lower arm 172j extends away from the pedestal 172f in the same direction as the upper arm 172h, ending in a lower slot 172k. Referring to FIG. 68, threaded fasteners 183, 184 threadedly engage threaded apertures 172m, 172n, respectively. Threaded fasteners 183, 184 are also illustrated in FIG. 69. Threaded fastener 183 is illustrated in FIG. 70.

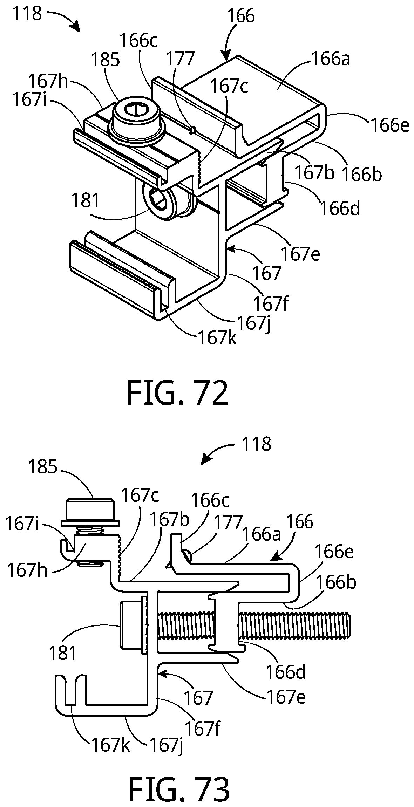

Referring to FIGS. 71-73, the skirt bracket 167 includes an upper arm 167h that extends away from the panel stop 167c in the opposite direction as the clamp jaw platform 167e, ending in an upper slot 167i. A lower arm 167j extends away from the pedestal 167f in the same direction as the upper arm 167h, ending in a lower slot 167k. Referring to FIG. 71, threaded fastener 185 threadedly engage threaded aperture 167m. Threaded fastener 185 is also illustrated in FIGS. 72 and 73.

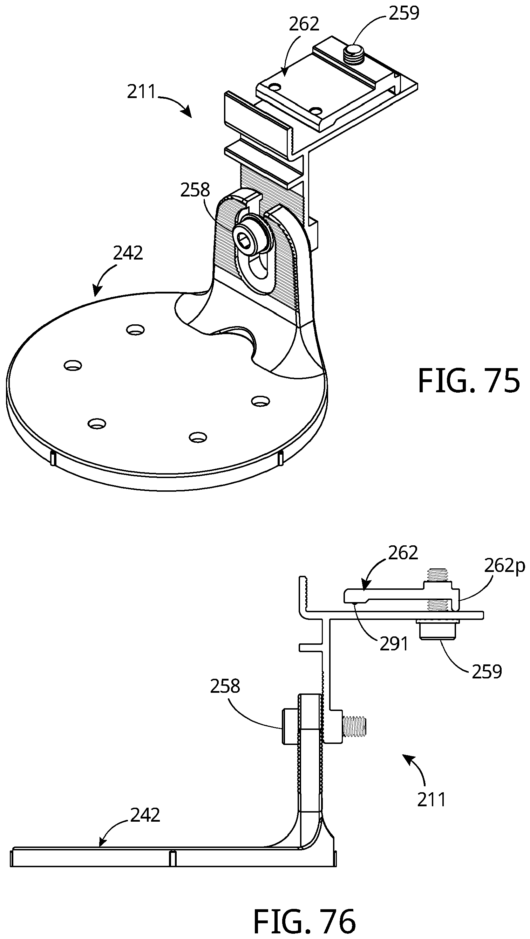

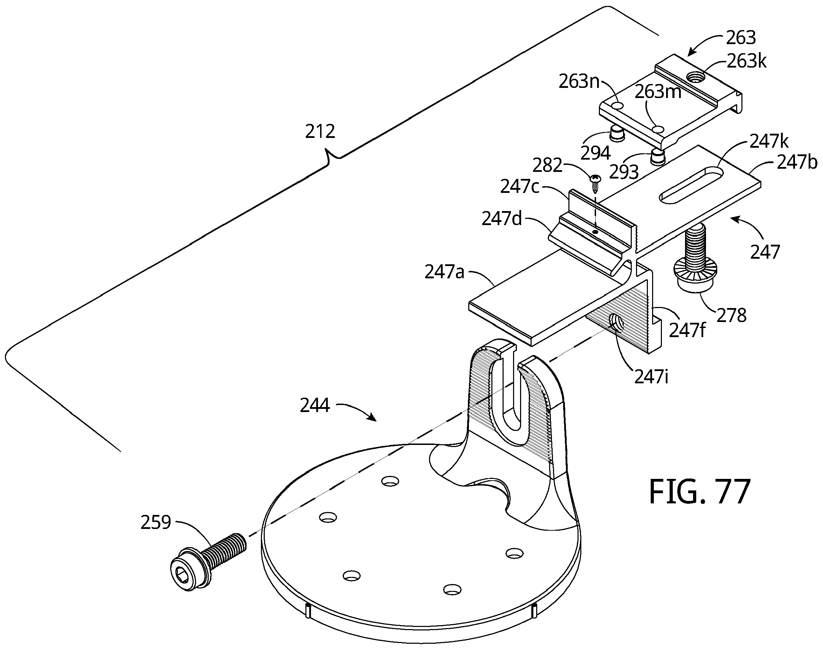

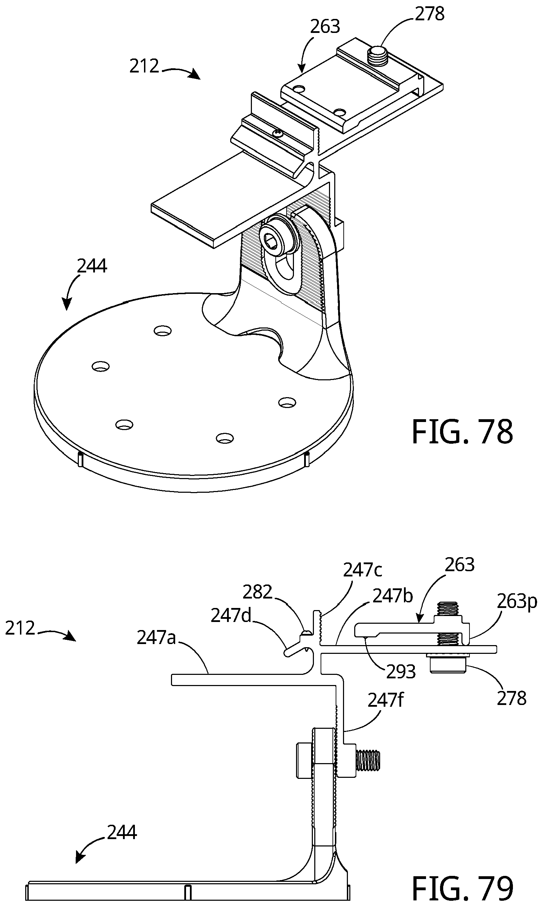

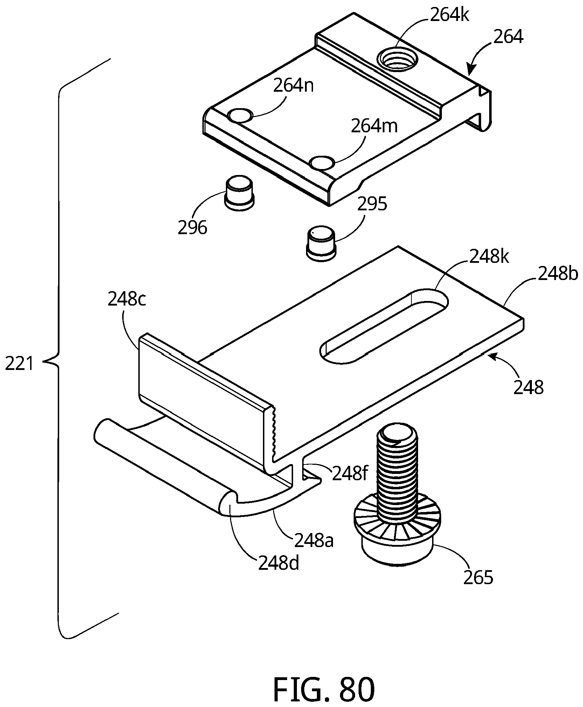

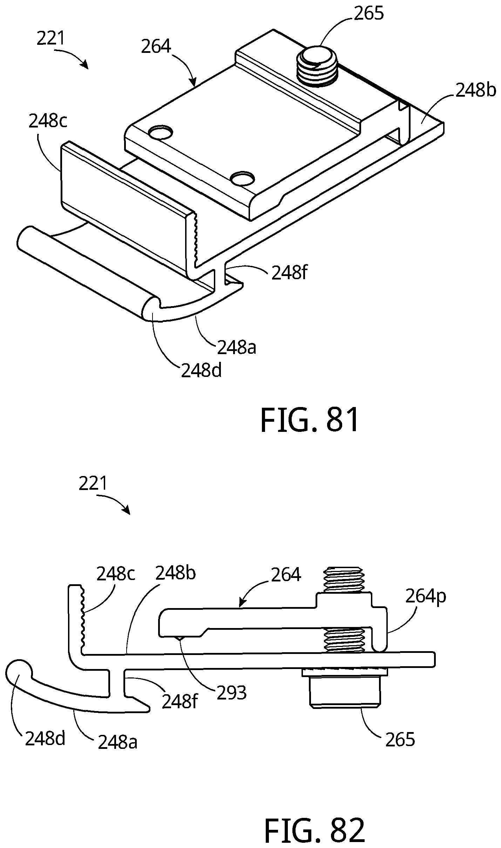

FIGS. 74-76, FIGS. 77-79, and FIGS. 80-82 illustrate examples of alternative versions of the end clamp assembly 211, mid clamp assembly 212, and catch clamp assembly 221, respectively. While similar to end clamp assembly 111, mid clamp assembly 112, and catch clamp assembly 121, of FIGS. 65, 62, and 59, respectively, these assemblies use a different clamping mechanism. Referring to FIGS. 74-76, FIGS. 77-79, and FIGS. 80-82, these assemblies use swivel jaw bodies 262, 263, 264, respectively, in place of the clamp jaws 164, 163, 162 of FIGS. 59, 62, and 65, respectively. Referring to FIG. 74, threaded fastener 259 threadedly engages threaded aperture 262k through slot-shaped aperture 261k in the panel platform 261b of the end clamp bracket 261. Bonding pins 291, 292, seat in apertures 262m, 262n, respectively. The bonding pins are typically press fit and can be formed from spring steel or other electrically-conductive material with sharp or sharpened ends. FIGS. 75 and 76 show threaded fastener 259 engaging swivel jaw body 262. FIG. 76 shows the sharpened end of the bonding pin 291 and a pivot 262p extending downward from the main body of the swivel jaw body 262. Referring to FIG. 77, the relationship between the threaded fastener 278, threaded aperture 263k, slot-shaped aperture 247k, the panel platform 247b, mid clamp bracket 247, bonding pin 293, bonding pin 294, aperture 263m, and aperture 263n is as described above in FIG. 74 for similarly-named parts. Threaded fastener 278 is also in FIGS. 78 and 79. FIG. 79 shows the sharpened end of bonding pin 293 and a pivot 263p extending downward from the main body of the swivel jaw body 263. Referring to FIG. 80, the relationship between the threaded fastener 265, threaded aperture 264k, slot-shaped aperture 248k, the panel platform 248b, catch clamp bracket 248, bonding pin 295, bonding pin 296, aperture 264m, and aperture 264n is as described above in FIG. 74 for similarly-named parts. Threaded fastener 265 is also in FIGS. 81 and 82. FIG. 82 shows the sharpened end of bonding pin 293 and a pivot 264p extending downward from the main body of the swivel jaw body 264.

The end clamp assembly 211 of FIGS. 74-76, and the mid clamp assembly 212 of FIGS. 77-79 include the L-foot 242 and the L-foot 244, respectively. The L-foot 242 and the L-foot 244 are as previously described. In FIG. 74, the threaded fastener 258 threadedly engages a threaded aperture 261i in the pedestal 261f of the end clamp bracket 261. The panel stop 261c, and height-adjustment stop 261a are as previously described. In FIG. 77, the threaded fastener 259 threadedly engages a threaded aperture 247i in the pedestal 247f of the mid clamp bracket 247. In FIGS. 77 and 79, the panel stop 247c extends upward from the panel platform 247b and the panel hook platform 247a extends away from the panel stop 247c and pedestal 247f as described. The hook receiver 247d extends from the pedestal 247f and the panel hook platform 247a. Threaded fastener 282, with a sharpened end, engages the hook receiver 247d with a portion of the threaded fastener 282 passing through the hook receiver 247d.

Referring to FIGS. 80-82, the hook arm 248a extends from the pedestal 248f and the panel platform 248b and terminates in an open end 248d. The open end 248d is shown as a ball hook catch, but could be a hook and slot, tab and slot, tongue and groove or other combination with a similar function. The panel stop 248c extends upward from the panel platform 248b.

FIGS. 83-87 show an example of an assembly sequence for the alternative version of the end clamp assembly. In this example, we depict attaching the end clamp assembly 211 to the first solar panel 101. A part of the first solar panel 101, which is shown resting face down on a work surface 157 is illustrated in FIGS. 85-87. In FIG. 83, the L-foot 242 is slid over the threaded fastener 258. The threaded fastener 258 is threadedly secured to the end clamp bracket 261. Referring to FIG. 84, to assure consistent height between end clamp and mid clamp assemblies, the top of the L-foot 242 can optionally rest against the height-adjustment stop 261a before securing the L-foot 242 to the end clamp bracket 261 using threaded fastener 258. In the example, the installer opted not to do that. In FIG. 85 the swivel jaw body 262 is rotated to clear the return flange 101b. In FIG. 86, the installer positions the panel stop 261c against the outside face of the solar panel frame 101c and the panel platform 261b against the return flange 101b. With the panel stop 261c and the panel platform 261b in position, the installer rotates the swivel jaw body 262 so it faces the solar panel frame 101c. In FIG. 87, the installer pushes the swivel jaw body 262 against the inside face of the solar panel frame 101c and then tightens the threaded fastener 259.

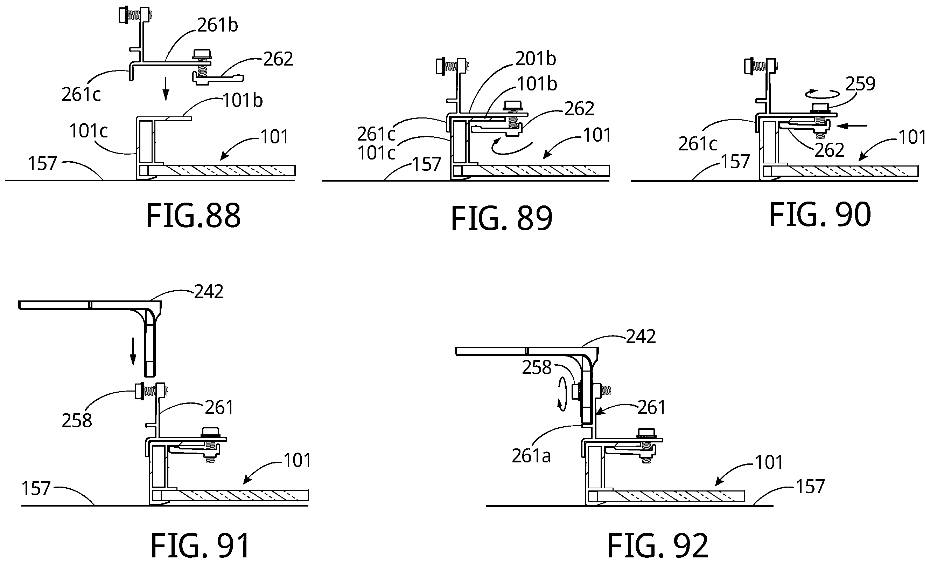

FIGS. 88-92 illustrate an alternative example of an assembly sequence for the end clamp assembly where the installer opts to secure end clamp bracket assemblies to a solar panel before securing the L-feet. The first solar panel 101 is resting face down on a work surface 157. FIGS. 88-92 illustrate an example of this sequence. In FIG. 88, with the swivel jaw body 262 rotated to clear the return flange 101b, the installer positions the panel stop 261c against the outside face of the solar panel frame 101c and the panel platform 261b against the return flange 101b. In FIG. 89, with the panel stop 261c and the panel platform 261b in position, the installer rotates the swivel jaw body 262 so it faces the solar panel frame 101c. In FIG. 90, the installer pushes the swivel jaw body 262 against the inside face of the solar panel frame 101c and then tightens the threaded fastener 259. In FIG. 91, with the end clamp bracket 261 secured to the first solar panel 101, the installer slides the L-foot 242 over the threaded fastener 258. In FIG. 92, the installer optionally slides the top of the L-foot 242 against the height-adjustment stop 261a of the end clamp bracket 261 and tightens the threaded fastener 258.

The installer can repeat the procedure in FIGS. 83-87 or FIGS. 88-92 for the mid clamp assembly 212, except using the panel hook platform 247a as a stop for the L-foot. The installer can repeat the procedure in FIGS. 88-90 for the catch clamp assembly 221.

### Additional Assembly Methods and Components for Metal Roofs

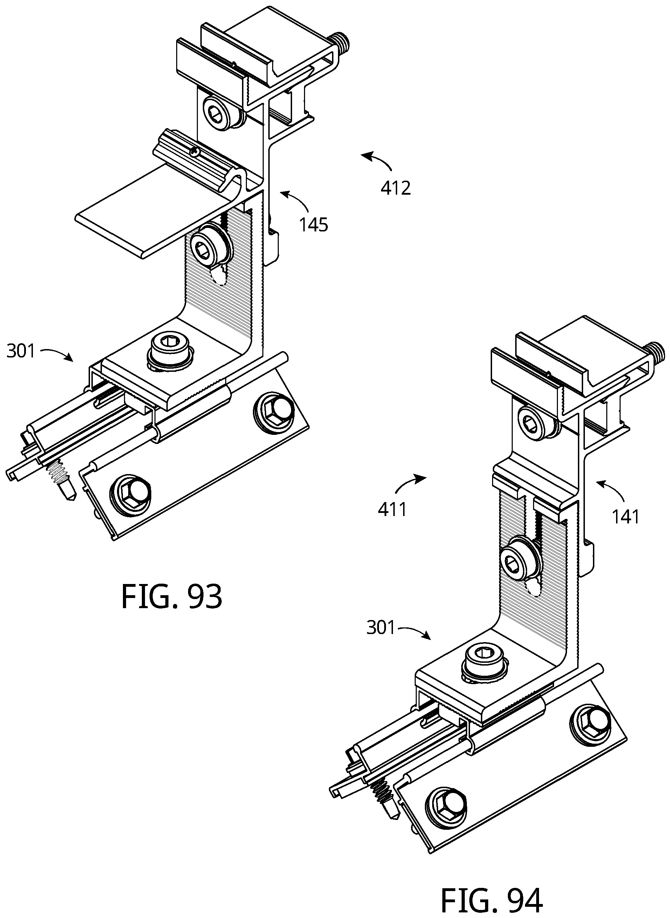

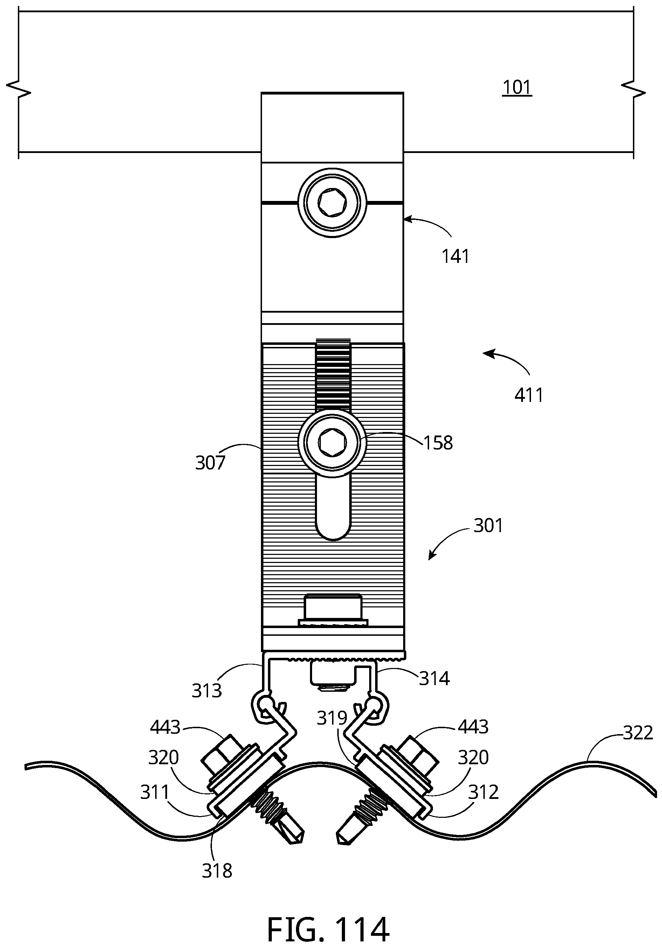

An installer or system designer can attach the solar panel array 100 to a variety of roofs and building structures. For example, roof 140 of FIGS. 3-5, 23-26, 29, and 30 can be a shingle roof, shake roof, tile roof with flat roof tiles, concrete roof, or a planar portion of a metal roof. The planar portions of metal roofs can include the planar portions of flat metal roofs, metal shake roofs, metal shingle roofs, and metal tile roofs. It can also include the top portion of a trapezoidal roof, and the planar portion of a standing seam roof between the standing seams. FIGS. 93-121 illustrate solar panel clamp assemblies structured to attach to a variety of both planar and non-planar metal roof surfaces. FIGS. 114-117 illustrate examples of a few of these roof types.

FIGS. 93 and 94 illustrate a mid clamp assembly 412 and an end clamp assembly 411, respectively, for use on a variety of both even and uneven metal roof surfaces. In FIG. 93, mid clamp assembly 412 may include mid clamp bracket assembly 145 and hinged metal roof mount 301. In FIG. 94, end clamp assembly 411 may include end clamp bracket assembly 141 and hinged metal roof mount 301. In FIG. 93, the mid clamp assembly 412 uses mid clamp bracket assembly 145 of FIG. 6 but replaces L-foot 144 with hinged metal roof mount 301. Similarly, in FIG. 94, the end clamp assembly 411 uses end clamp bracket assembly 141 of FIG. 5, but replaces L-foot 142 with hinged metal roof mount 301. Following the steps in FIGS. 9, and 10, an installer may use instances of end clamp assembly 411, mid clamp assembly 412, and the catch clamp assemblies previously discussed, to create solar panel assemblies and then secure the solar panel assemblies to metal roofs.

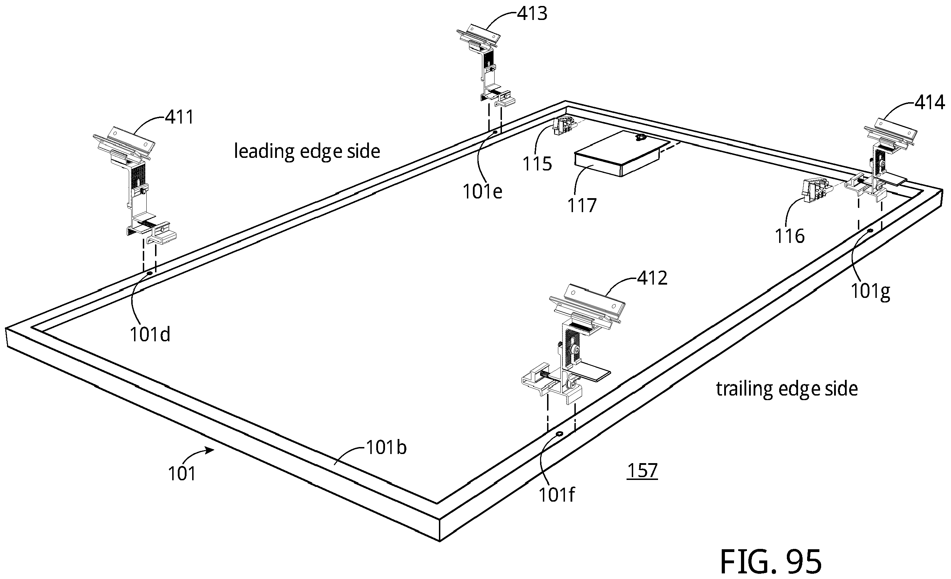

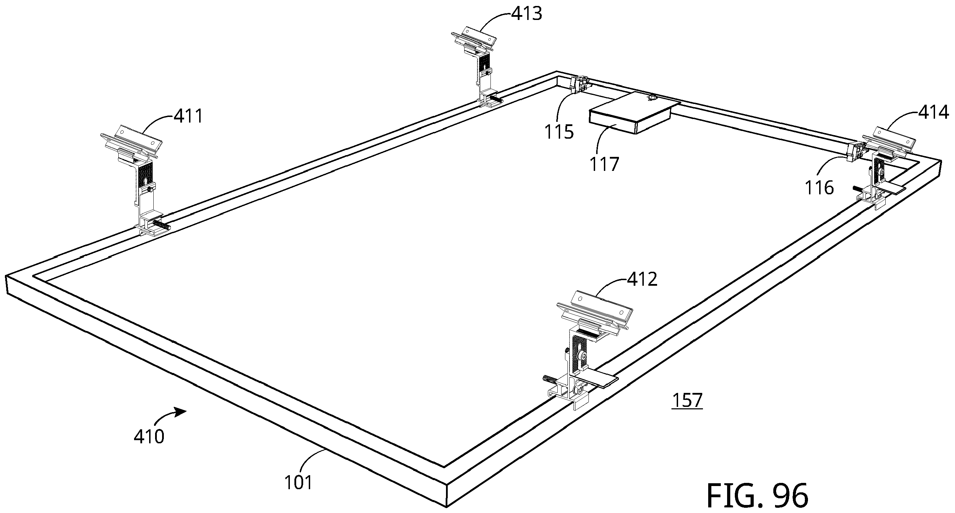

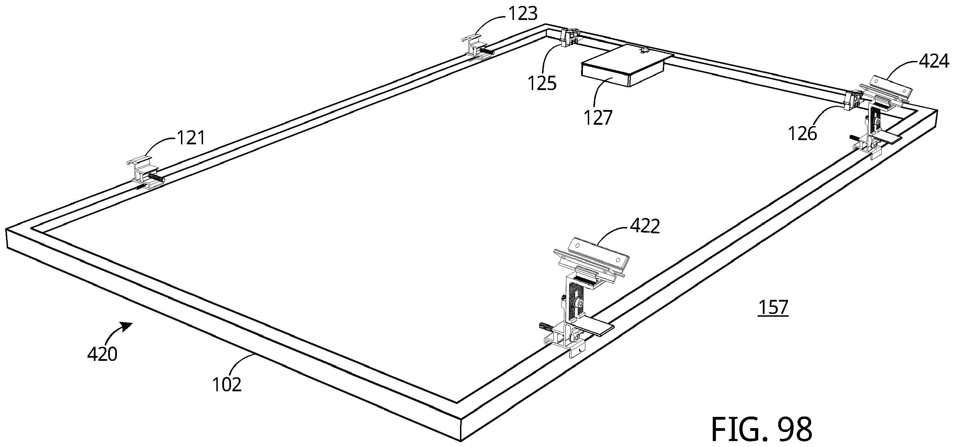

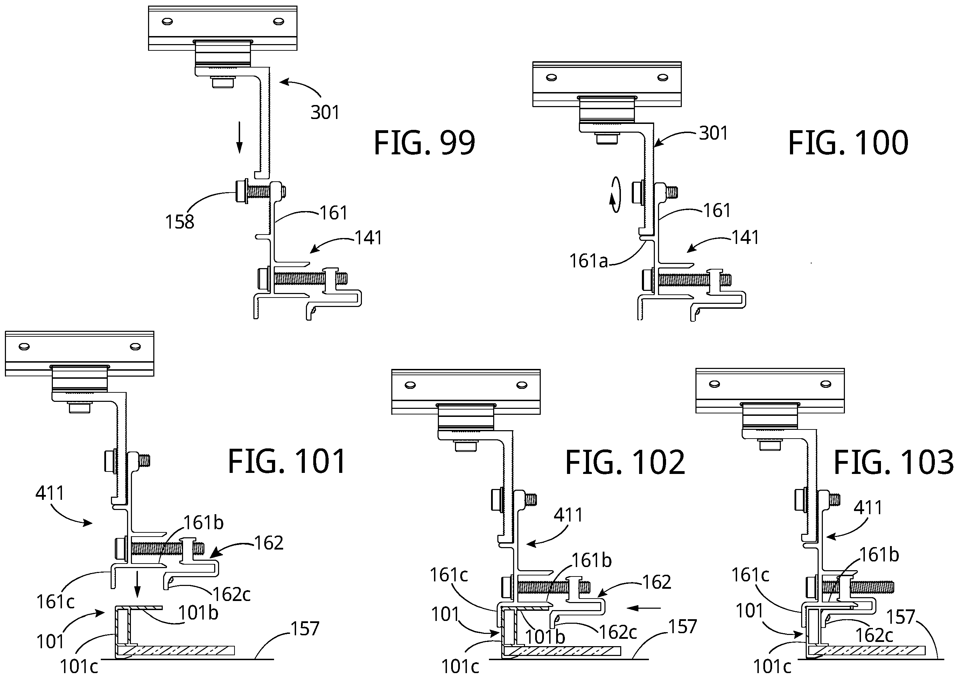

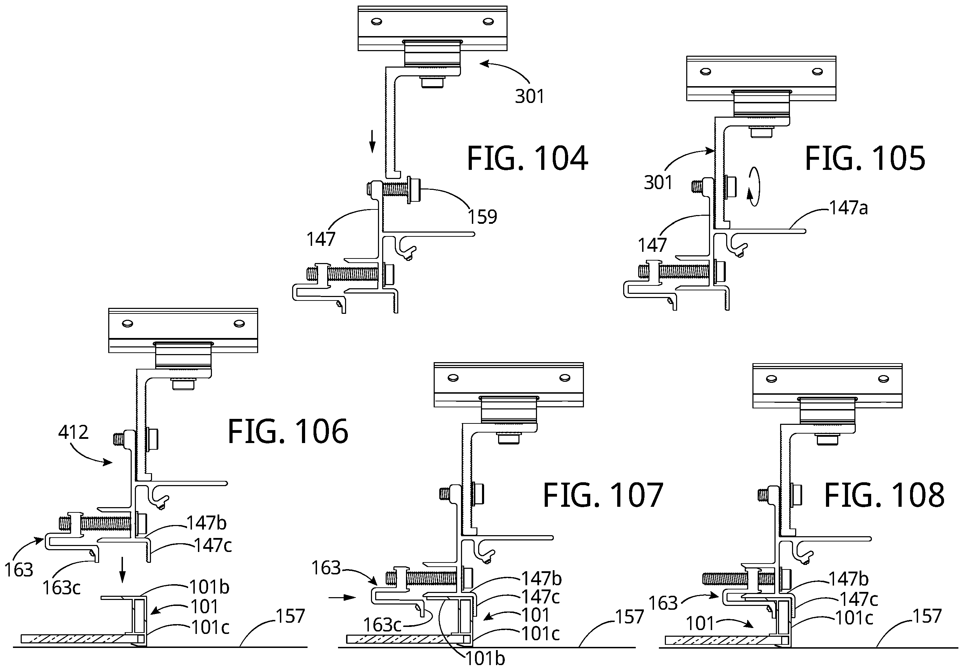

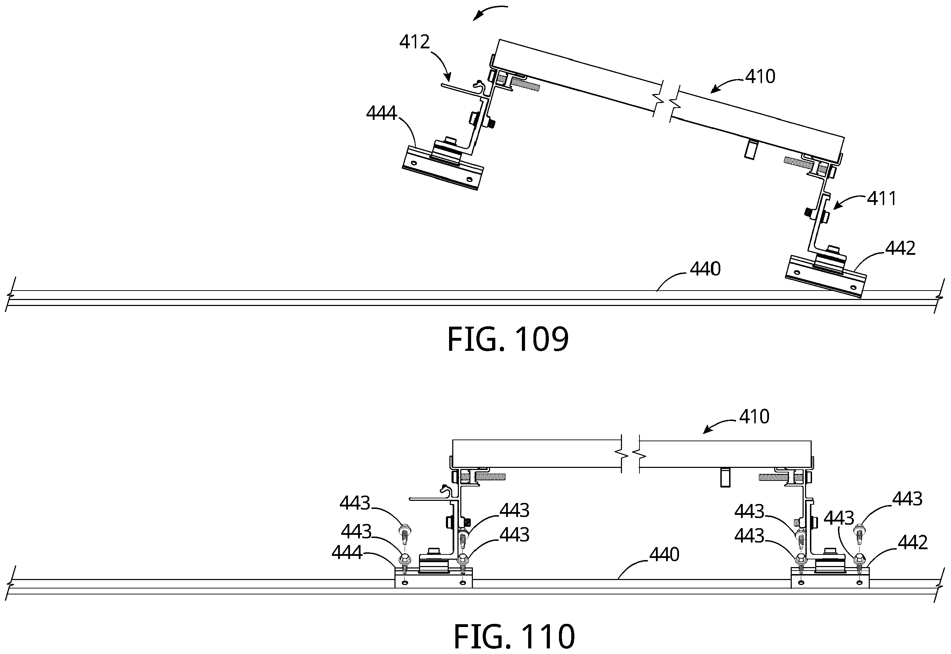

In FIG. 9, the installer pre-attaches, at the job site, solar panel clamp assemblies, catch clamp assemblies, and optionally solar panel accessories to their respective solar panels according to step 150. The installer may install the solar panels facing down on the ground, on a work surface, or on a building structure, such as a roof. The installer attaches the resulting solar panel assemblies to the roof or building structure according to steps 151, 152, 153, 154, 155. FIGS. 95-98 illustrate, in perspective view, a sequence for attaching instances of end clamp assembly 411, instances of mid clamp assembly 412, and instances of the previously described catch clamp assemblies to form the first two solar panel assemblies. The first two solar panel assemblies are the first solar panel assembly 410 (FIG. 96), and the second solar panel assembly 420 (FIG. 98). FIGS. 99-103 detail one method for assembling instances of the end clamp assembly 411 and attaching them to the first solar panel 101. FIGS. 104-108 detail a similar method for assembling instances of mid clamp assembly 412 to the first solar panel 101. FIGS. 109-112 illustrate how an installer can attach the resulting solar panel assemblies to a metal roof 440.

In FIG. 95, and step 150c of FIG. 10, with the first solar panel 101 positioned face down on a work surface 157, an installer may secure the end clamp assemblies 411, 413 to the leading edge side of return flange 101b of the first solar panel 101. The installer may secure mid clamp assemblies 412, 414 to the trailing edge side of the return flange 101b. The installer can optionally use manufacturer-provided mounting holes 101d, 101e, to align end clamp assemblies 411, 413, respectively. Likewise, the installer can optionally align mid clamp assemblies 412, 414 to manufacturer-provided mounting holes 101f, 101g, respectively. The description for FIG. 31 discusses the manufacturer-provided mounting holes 101d, 101e, 101f, 101g.

In FIG. 95, an installer may install wire management clips 115, 116, and MLPE 117 as illustrated in FIGS. 12 and 13, following the step 150g of FIG. 11. The description for FIGS. 18 and 19 discuss, in detail, the installation of the MLPE 117. Likewise, the description for FIGS. 20 and 21 discuss, in detail, the installation of the wire management clip 115.

FIG. 96 illustrates the resulting assembly, the first solar panel assembly 410, face down on work surface 157. The first solar panel assembly includes the first solar panel 101, end clamp assemblies 411, 413, and mid clamp assemblies 412, 414. As illustrated, the first solar panel assembly 410, may also include wire management clips 115, 116, and MLPE 117.

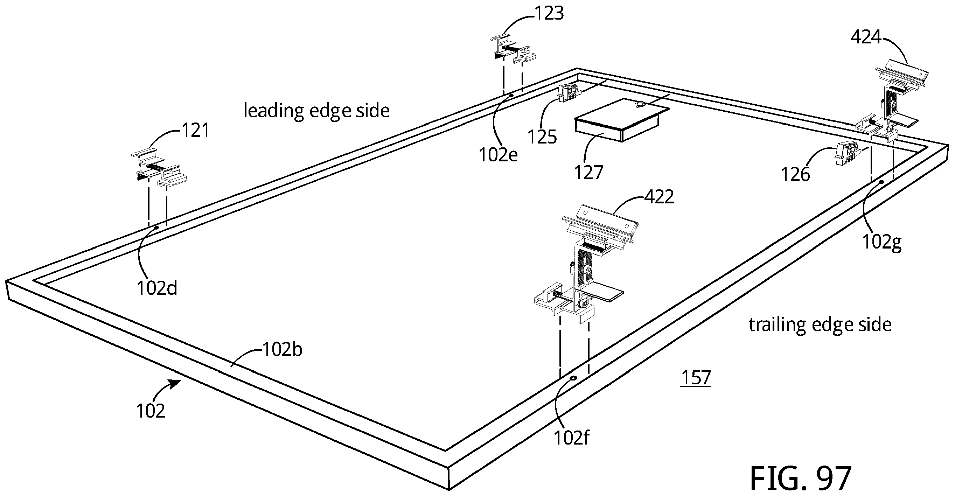

In FIG. 97, and step 150d of FIG. 10, with the second solar panel 102 face down on the work surface 157, the installer attaches catch clamp assemblies 121, 123 to the return flange 102b on the leading edge of the second solar panel 102. The installer attaches instances of mid clamp assembly 412, mid clamp assembly 422, 424 to the return flange 102b on the trailing edge of the second solar panel 102. The installer may optionally align the catch clamp assemblies 121, 123 to manufacturer-provided mounting holes 102d, 102e, respectively. The installer may optionally align the mid clamp assemblies 422, 424 to manufacturer-provided mounting holes 102f, 102g, respectively. The installer, as described, may optionally install accessories, such as the wire management clips 125, 126, and the MLPE 127.

FIG. 98 illustrates the resulting assembly, the second solar panel assembly 420, face down on work surface 157. The second solar panel assembly includes the second solar panel 102, catch clamp assemblies 121, 123, mid clamp assemblies 422, 424. As illustrated, the second solar panel assembly 120, may also include wire management clips 125, 126, and MLPE 127.

FIGS. 99-103 and FIGS. 104-108 illustrate sequences of attaching an end clamp assembly and mid clamp assembly, respectively, to a solar panel resting face down on a work surface. FIGS. 101-103 and FIGS. 106-108, illustrate the first solar panel 101 resting face down against the work surface 157 at the job site. In FIG. 99, the hinged metal roof mount 301 is slid over the threaded fastener 158. The threaded fastener 158 is threadedly secured to the end clamp bracket 161 of the end clamp bracket assembly 141. Referring to FIG. 100, to assure consistent height between the end clamp and mid clamp assemblies without measurement, the top of the hinged metal roof mount 301 can rest against the height-adjustment stop 161a of the end clamp bracket 161, before securing the hinged metal roof mount 301 to the end clamp bracket assembly 141. FIGS. 101-103 illustrate attachment of the resulting assembly, end clamp assembly 411 to the first solar panel 101. In FIGS. 101 and 102, with the clamp jaw face 162c of the clamp jaw 162 positioned sufficiently away from the panel stop 161c to clear the return flange 101b, the installer positions the panel stop 161c against the outside face of the solar panel frame 101c. And the installer positions the solar panel platform 161b against the return flange 101b. With the panel stop 161c and the solar panel platform 161b in position, in FIG. 103, the installer tightens the clamp jaw face 162c against the inside face of the solar panel frame 101c.

The sequence of attaching the mid clamps to the solar panel is similar to the sequence described in the last paragraph. In FIG. 104, the hinged metal roof mount 301 slides over the threaded fastener 159. The threaded fastener 159 is secured to mid clamp bracket 147. Referring to FIG. 105, to assure consistent height between end clamp and mid clamp assemblies, the top of the hinged metal roof mount 301 can rest against the bottom of the panel hook platform 147a before securing the hinged metal roof mount 301 to the mid clamp bracket 147. FIG. 106 illustrates the resulting assembly, mid clamp assembly 412. In FIGS. 106 and 107, with the clamp jaw face 163c of the clamp jaw 163 positioned sufficiently away from the panel stop 147c to clear the return flange 101b, the installer positions the panel stop 147c against the outside face of the solar panel frame 101c. And the installer positions the solar panel platform 147b against the return flange 101b. With the panel stop 147c and the solar panel platform 147b in position, in FIG. 108, the installer tightens the clamp jaw 163 against the inside face of the solar panel frame 101c.

An installer can secure the mid clamp assemblies 422, 424 to the second solar panel 102 as described above for FIGS. 104-108. Likewise, an installer can secure catch clamp assemblies to the second solar panel 102 as described for FIGS. 51-53.

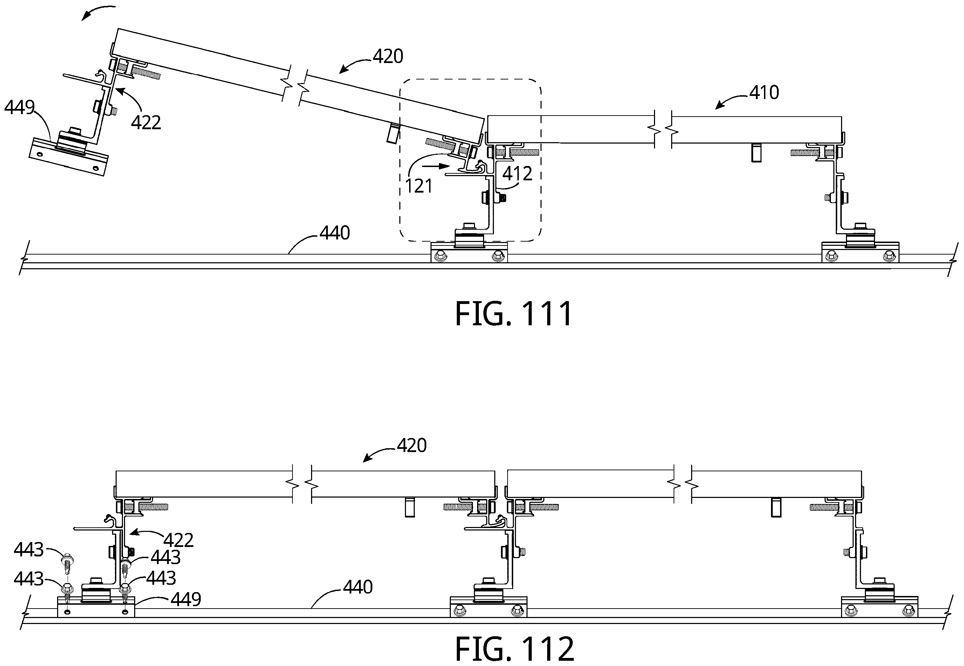

The installer may install first solar panel assembly 410 in FIGS. 109 and 110, and second solar panel assembly 420 in FIGS. 111 and 112, according to the methods described in FIG. 9. Referring to FIG. 9, in step 151, and as illustrated in FIGS. 109 and 110, the installer places the first solar panel assembly 410 on the metal roof 440 and secures it. In FIG. 109, the installer places the hinge base assembly 442 of end clamp assembly 411 on the metal roof 440. The hinge base is hingedly adjustable to follow the contours of the metal roof. The installer hingedly adjusts the hinge bases of the hinge base assembly 442 to conform to the shape of the roof surface. The installer rotates the first solar panel assembly 410 to place the hinge base assembly 444 of the mid clamp assembly 412 toward the metal roof 440. In FIG. 110, the installer places the hinge base assembly 444 onto the metal roof and hingedly adjusts the hinge bases of hinge base assembly 444 to conform to the metal roof contour. The installer could also place the first solar panel assembly 410 straight down. The installer could slide it into place. In FIG. 110, the installer secures the first solar panel assembly 410 to the metal roof 440 using multiple instances of the roof mounting fastener 443 through the hinge base assembly 442 and the hinge base assembly 444.

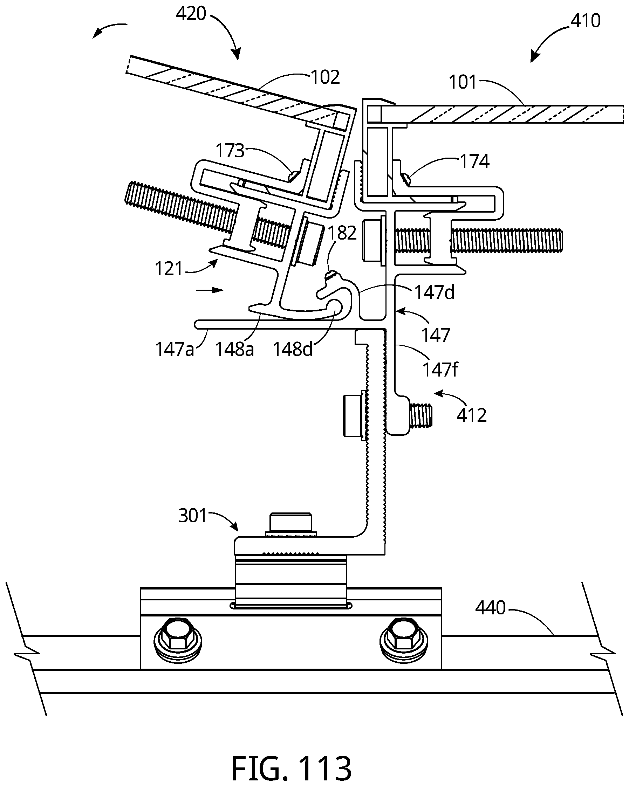

Referring to FIG. 9, in step 152, the installer secures the second solar panel assembly to the first solar panel assembly. The installer does this by engaging the catch clamp assemblies on the leading edge of the second solar panel assembly with correspondingly-positioned mid clamp assemblies on the trailing edge of the first solar panel assembly. FIGS. 111 and 113 illustrate an example of how an installer can do this. With the first solar panel assembly 410 attached to the metal roof 440, the installer engages the catch clamp assembly 121 of the second solar panel assembly 420 with the mid clamp assembly 412 of the first solar panel assembly 410. Referring to FIG. 111, the installer then pivots the second solar panel assembly 420 until the hinge base assembly 449 of the mid clamp assembly 422 rests against the metal roof 440.

Referring to FIG. 113, the open end 148d of the hook arm 148a of the catch clamp assembly 121 engages the hook receiver 147d of the mid clamp bracket 147 of the mid clamp assembly 412. At the same time the bottom of the hook arm 148a, acting as a seating platform, pivots against the panel hook platform 147a of the mid clamp bracket 147, because of its generally curved-shaped seating surface. Here, the generally curve-shaped seating surface includes a downward-facing generally convex shape.

Referring to FIG. 113, the structural relationship between components and their variations as described for FIG. 27 applies to FIG. 113. For example, FIG. 113 illustrates the open end 148d as a ball hook catch. The hook receiver 147d, as illustrated, includes a generally concave-shaped interior and is so shaped to create a rotational stop for the open end 148d. The end portion of the hook receiver 147d is angled sufficiently at an acute angle to prevent the open end 148d and hook arm 148a from rotating further counterclockwise. The hook receiver 147d includes an end portion extending toward the panel hook platform 147a. The hook arm 148a, the open end 148d, and the hook receiver 147d could alternatively be a tongue and groove, a tab and slot, or a hook and slot as discussed in FIG. 27. For example, a slot-shaped opening in the pedestal 147f could replace the hook receiver 147d. The open end 148d could be shaped for the slot-shaped opening to capture and retain it. The open end 148d could be shaped like a tab or a hook. The sharp tip of threaded fastener 173 electrically bonds the catch clamp assembly 121 to the second solar panel 102. The sharp tip of threaded fastener 174 electrically bonds the mid clamp assembly 412 to the first solar panel 101. Threaded fastener 182 completes the electrical bonding circuit between the first solar panel assembly 410 and the second solar panel assembly 420. The sharp tip of threaded fastener 182, presses against the open end 148d, here as a ball hook catch, to electrically bond the catch clamp assembly 121 to the mid clamp assembly 412.

Referring to FIG. 9, in step 153, the installer then secures the mid clamp assembly on the trailing edge of the second solar panel to the building surface. As an example, in FIG. 112, the installer hingedly adjusts the hinge base to follow the contour of the metal roof. With the mid clamp assembly 422 resting against the metal roof 440, the installer secures the hinge base assembly 449 of the mid clamp assembly 422 using multiple instances of the roof mounting fastener 443. The mid clamp assembly 422 is attached to the trailing edge of second solar panel assembly 420. Referring to FIG. 9, in step 154 and step 155, the installer repeats the procedure for the rest of the panels in that column of the solar panel array.

One advantage of the hinged metal roof mount 301 in FIGS. 93, 94, 99, 100, 104, 105, 113-118, and 121 and resulting end clamp and mid clamp assemblies is that an installer can use the method of FIG. 9 for a variety of metal roof surfaces and types. FIGS. 114-117 illustrate four such examples. In each case, the installer hingedly (or pivotably) adjusts the hinge bases to follow the contour of the roof. FIGS. 114-117, show end clamp assembly 411 attached to various metal roof types. End clamp assembly 411 includes end clamp bracket assembly 141 and hinged metal roof mount 301 secured together. The end clamp bracket assembly 141 secures the first solar panel 101.

FIG. 114 illustrates the end clamp assembly 411 and the hinged metal roof mount 301 secured to a corrugated roof 322. In this example, the first hinge base 311 and the second hinge base 312 are angled at approximately 42-degrees with respect to the horizon. The hinge platform 313 and hinge sub-platform 314 are adjusted to approximately mid-width. For a corrugation pattern of the same height but with wider corrugations, the first hinge base 311 and the second hinge base 312 would be pivoted to a shallower angle with respect to the horizon. In addition, hinge platform 313 and hinge sub-platform 314 would be adjusted to a wider width to accommodate the wider corrugations.

The hinged metal roof mount 301 is secured to the corrugated roof 322 by instances of the roof mounting fastener 443 passing into the corrugated roof 322 through first hinge base 311 and second hinge base 312. An instance of the roof mounting fastener 443 pass into sealing washer 320, first hinge base 311, and gasket 318. Another instance of the roof mounting fastener 443 pass into sealing washer 320, second hinge base 312 and gasket 319.

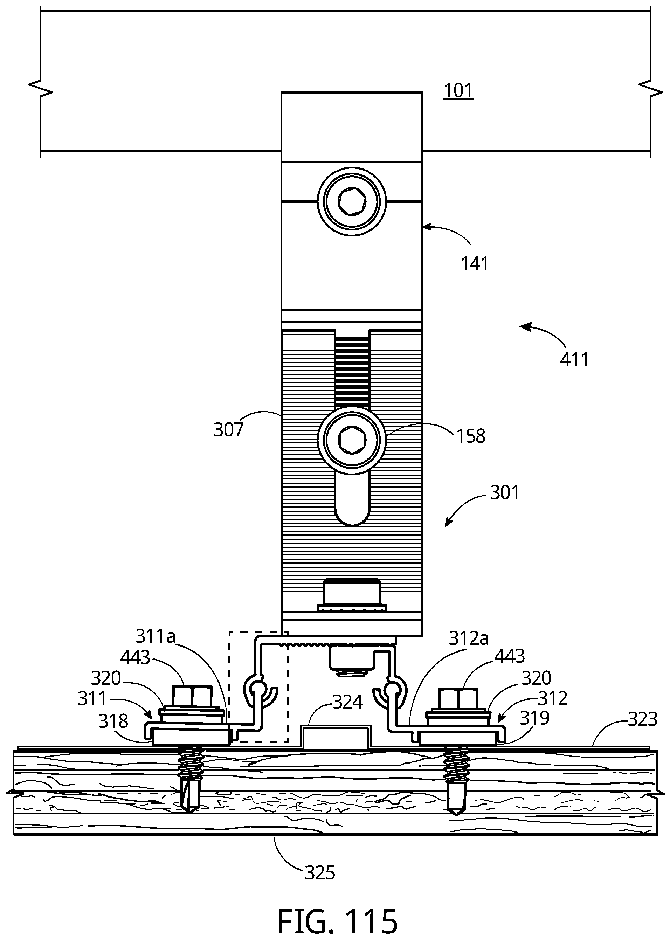

FIG. 115 illustrates the end clamp assembly 411 and the hinged metal roof mount 301 secured to a substantially flat metal roof 323. The hinged metal roof mount is shown positioned on either side of a small support rib 324. First hinge base 311 and second hinge base 312 are rotated so the roof-anchoring platform 311a and roof-anchoring platform 312a are horizonal. The hinged metal roof mount 301 is secured to the substantially flat metal roof 323 by instances of roof mounting fastener 443 in combination with corresponding instances of a sealing washer 320 and corresponding gaskets, gasket 318, and gasket 319. The instances of roof mounting fastener 443 can also be secured to decking or sheathing 325 for additional pullup strength. Here the sheathing 325 is shown as plywood. The hinged metal roof mount 301 can also be attached to other sheathing materials, for example, plank decking, or oriented strand board (OSB).

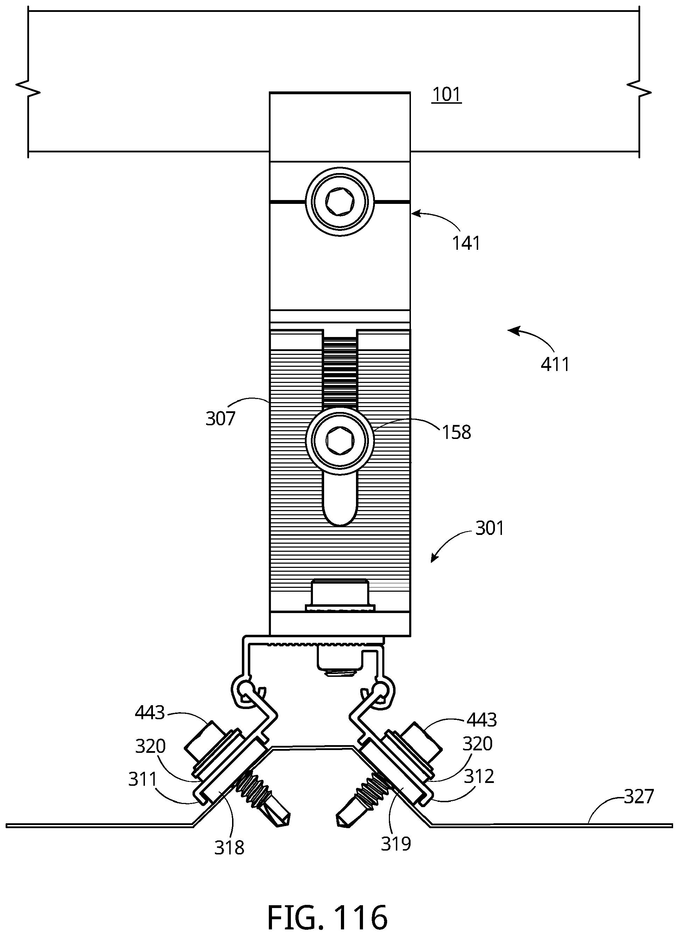

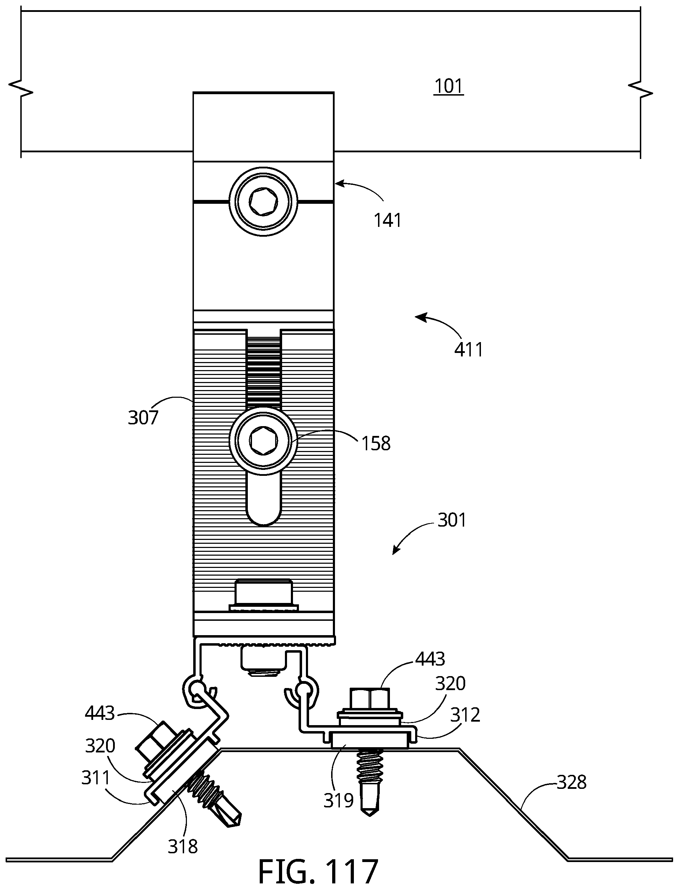

FIGS. 116 and 117 illustrate the end clamp assembly 411 and the hinged metal roof mount 301 secured to trapezoidal roofs of various widths and heights. In FIG. 116, the hinged metal roof mount 301 is adjusted to maximum width and with first hinge base 311 and second hinge base 312 adjusted to approximately a 45-degree angle with respect to the horizon to accommodate trapezoidal metal roof 327. In FIG. 117, the hinged metal roof mount 301 is adjusted to mid-width but attached to a wider trapezoidal rib than in FIG. 116. First hinge base 311 is adjusted to approximately a 45-degree angle with respect to the horizon and second hinge base 312 is adjusted to approximately a 0-degrees angle with respect to the horizon to accommodate trapezoidal metal roof 328. In FIGS. 116 and 117, the hinged metal roof mount 301 is secured to the respective trapezoidal roof surfaces by instances of roof mounting fastener 443 in combination with corresponding instances of sealing washer 320 and corresponding gaskets, gasket 318 and gasket 319.

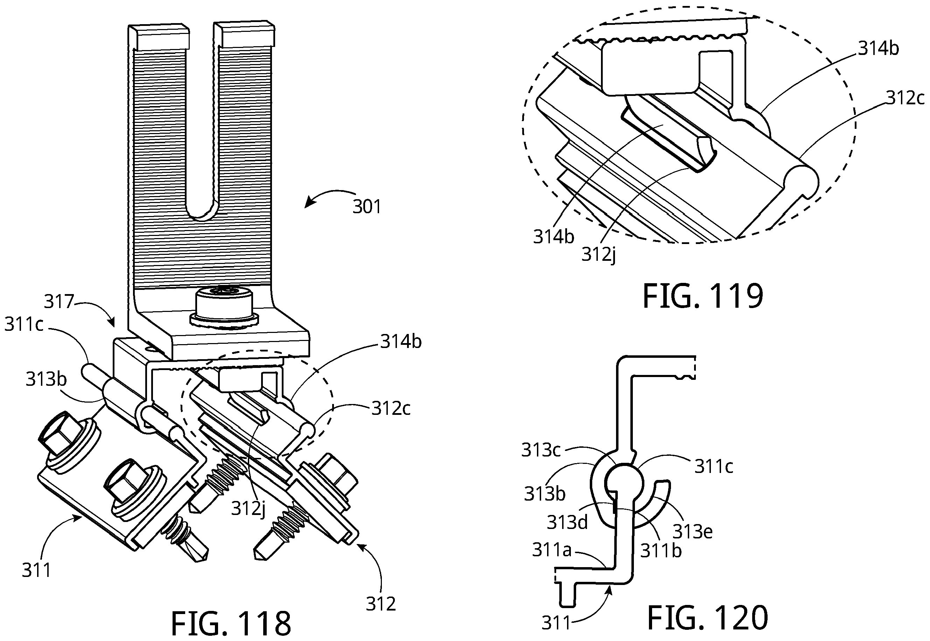

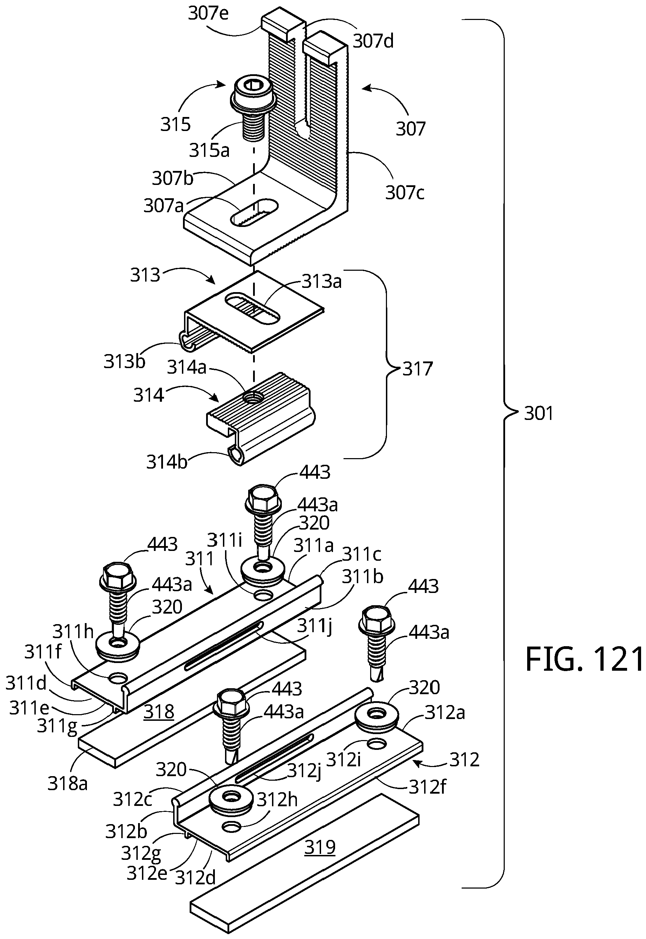

FIGS. 118-121 illustrates various views of hinged metal roof mount 301. FIG. 118 illustrates a front isometric view of hinged metal roof mount 301. FIGS. 119 and 120 illustrate how the hinge mechanism works. FIG. 119 illustrates an enlarged portion of FIG. 118. FIG. 120 illustrates an enlarged portion of the hinged metal roof mount 301 of FIG. 115. FIG. 121 illustrates an exploded isometric view of hinged metal roof mount 301.

Referring to FIGS. 118 and 121, the first hinge base 311 and the second hinge base 312 pivotally engage the hinge platform assembly 317. First hinge sleeve 313b wraps around the hinge pin 311c through slot-shaped aperture 311j. The second hinge sleeve 314b wraps around the hinge pin 312c through slot-shaped aperture 312j. Slot-shaped aperture 311j is hidden from view in FIGS. 118.

FIG. 119 illustrates a portion of FIG. 118, showing the interaction between the hinge pin 312c, the second hinge sleeve 314b, and the slot-shaped aperture 312j. The hinge sleeve includes a hollow interior.

FIG. 120 illustrates portions of the riser 311b, hinge pin 311c, first hinge sleeve 313b, upper arcuate-shaped portion 313c, and lower arcuate-shaped portion 313e. The planar portion 313d is angled to limit the outward rotation of the roof-anchoring platform 311a by acting as a rotational stop for the planar portion 313d. As illustrated, the outward rotation of the roof-anchoring platform 311a is limited to 0 degrees (i.e. horizontal). The angle of the planar portion 313d or the angle of the riser 311b can be changed to set other outward rotational stop angles, setting a greater or lesser range of motion of the first hinge base 311.

In FIG. 121, the hinged metal roof mount 301 may include a pair of hinge bases, a hinge platform 313, a hinge sub-platform 314, and the L-foot 307. FIG. 121 shows the pair of hinge bases as the first hinge base 311 and the second hinge base 312. A threaded fastener 315 secures together the hinge platform 313 and hinge sub-platform 314 to form a hinge platform assembly 317. The threaded fastener body 315a passes through slot-shaped aperture 313a in the hinge platform 313 and threadedly engages a threaded aperture 314a in hinge sub-platform 314. With the threaded fastener 315 tightened, the hinge platform 313 and the hinge sub-platform 314 form a rigid assembly. The threaded fastener 315 can secure the L-foot 307 to the hinge platform assembly 317. The threaded fastener body 315a passes into a slot-shaped aperture 307a on the L-foot base 307b, passes into the slot-shaped aperture 313a, and then threadedly engages the threaded aperture 314a. The L-foot 307 also may include an L-foot riser 307c that extends upward from the L-foot base 307b. The L-foot riser 307c may include a slot-shaped opening 307d. Referring to FIGS. 99 and 114-117, the slot-shaped opening 307d of FIG. 121 allows a fastener, such as threaded fastener 158, to engage the end clamp bracket assembly 141, and move the first solar panel 101 up or down relative to the L-foot base 307b. Referring to FIG. 121, the L-foot riser 307c can include a keeper 307e extending outward from the L-foot riser 307c in the direction of the L-foot base 307b to prevent a partially-tightened fastener from exiting the top of the slot-shaped opening 307d.

The first hinge base 311 includes a roof-anchoring platform 311a, a riser 311b extending upward from the roof-anchoring platform 311a, and a hinge pin 311c extending lengthwise along the end of riser 311b. The end of riser 311b is distal to the roof-anchoring platform 311a. The hinge pin 311c extends from the end of the riser 311b forming a rigid structure with the roof-anchoring platform 311a. The second hinge base 312 includes a roof-anchoring platform 312a, a riser 312b extending upward from the roof-anchoring platform 312a, and a hinge pin 312c extending lengthwise along the end of the riser 312b. The end of the riser 312b is distal to the roof-anchoring platform 312a. The hinge pin 312c extends from the end of the riser 312b forming a rigid structure with the roof-anchoring platform 312a. The roof-anchoring platform 311a and the roof-anchoring platform 312a include a cavity 311d and a cavity 312d, respectively. Cavity 311d extends below the roof-anchoring platform bottom surface 311e and between a first sidewall 311f and a second sidewall 311g. The first sidewall 311f and second sidewall 311g project downward from the roof-anchoring platform bottom surface 311e. Cavity 312d extends below the roof-anchoring platform bottom surface 312e and between a first sidewall 312f and a second sidewall 312g. First sidewall 312f and second sidewall 312g project downward from the roof-anchoring platform bottom surface 312e. Cavity 311d and cavity 312d receive gasket 318 and gasket 319, respectively. Gasket 318 and gasket 319 can be held in their respective cavities by pressure or can be secured by an adhesive or bonding agent. For example, gasket 318 can have a pre-applied adhesive strip that secures it to the roof-anchoring platform bottom surface 311e. Alternatively, an installer can apply adhesive to either the roof-anchoring platform bottom surface 311e or the gasket top surface 318a.

FIG. 121 shows various instances of roof mounting fasteners, roof mounting fastener 443 with threaded fastener bodies 443a. The threaded fastener bodies 443a pass through a corresponding instance of a sealing washer 320, then into corresponding apertures, aperture 311h, aperture 311i, aperture 312h, and aperture 312i, and finally into corresponding gaskets, gasket 318, and gasket 319. Roof mounting fastener 443 is typically a self-taping or self-drilling screw. The sealing washer is typically a conical metal washer with a gasket such as polychloroprene (neoprene) or ethylene propylene diene monomer rubber (EPDM).

### Conclusion

Described are solar panel systems, devices, and methods for mounting the solar panel system to roofs and similar surfaces. Examples of devices, components, and configurations are provided to help the reader in understanding the described general principles. The following are examples of how different components, structures, and features can be varied while still adhering to the general principles.

In the discussion for FIG. 27, the hook arm 148a, the open end 148d, and the hook receiver 147d could, as an alternative, be structured as tongue and groove, a hook and slot, or a tab and slot. As an example, the open end 148d of FIG. 27 could be structured like the lower tab 169k of FIG. 57. The hook receiver 147d of FIG. 27 could be structured like the lower slot 167k of FIG. 57. As an alternative, instead of structuring the hook receiver 147d of FIG. 27 like the lower slot 167k of FIG. 57, in FIG. 27, the hook receiver 147d could be a slot-shaped aperture in the pedestal 147f. As an example of a tongue and groove, a groove could be formed in place of the hook receiver 147d or in the wall of the pedestal 147f. The open end 148d could be shaped like a tongue with a complementary shape to the groove.

The alternative mid clamp and catch clamp interface discussed in the paragraph above for mid clamp assembly 112 and catch clamp assembly 121 in FIG. 27 can also be applied to the mid clamp assembly 212 of FIG. 77 and catch clamp assembly 221 of FIG. 80. These components include features that can be interchanged. Referring to FIG. 80, the open end 248d can be structured like the lower tab 169k of FIG. 57. The hook receiver 247d in FIG. 77 could be like the lower slot 167k of FIG. 57 or as an alternative, like a slot-shaped aperture in pedestal 247f of FIG. 77. As a tongue and groove structure, a groove could be formed in place of the hook receiver 247d or in the wall of the pedestal 247f of FIG. 77. The open end 248d of FIG. 80 could be shaped like a tongue to be captured in the groove.

FIG. 77 illustrates the hook receiver 247d extending from the pedestal 247f. This principle can be applied to the mid clamp assembly 112 of FIGS. 62-64 and elsewhere in this disclosure. For example, referring to FIG. 64, the hook receiver 147d could extend directly from the pedestal 147f with its end extending downward toward the panel hook platform 147a.

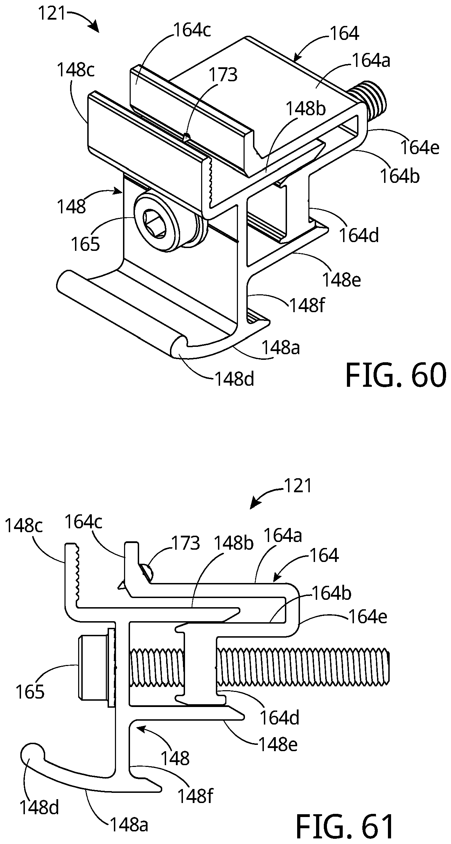

One purpose of the pedestal in the catch clamp is to position the height of the solar panel so its top surface is co-planar with the adjacent solar panels. The height of the pedestal of the catch clamp can be such that the top surfaces of the solar panel platform of the catch clamp and the mid clamp of the adjacent solar panel are co-planar. It may be possible to eliminate the pedestal of the catch clamp and still align top surfaces of the solar panels in the same plane by changing the mid clamp assembly. It may also be possible to eliminate the pedestal of the catch clamp if co-planar alignment is unnecessary. Modifying the hook arm could eliminate the pedestal 148f in FIGS. 60-62 and elsewhere, and the pedestal 248f of FIGS. 80-82. As an example, in FIG. 61, the hook arm 148a can extend directly downward from the clamp jaw platform 148e and be sized and shaped to space the seating surface of the hook arm 148a away from the solar panel platform 148b as if the pedestal 148f were there. For example, the hook arm 148a could extend from the clamp jaw platform 148e at nearly a 90-degree angle and gradually flatten out to provide a seating surface.

The threaded fasteners illustrated throughout this disclosure are suggestive of what could be used. For example, the threaded fastener 165 of FIG. 60, the threaded fasteners 159, 178 of FIG. 63, the threaded fasteners 158, 179 of FIG. 66, the threaded fasteners 180, 183, 184 of FIG. 69, the threaded fasteners 181, 185 of FIG. 72, the threaded fasteners 258, 259 of FIG. 74, and the threaded fasteners 259, 278 of FIG. 77 are illustrated as socket head cap screws with hexagonal sockets. This screw head style allows the installer to use a power tool such as an electric drill or impact driver. Other screw head styles could be used. One example includes a hex-head cap screw, also known as a hex-head bolt or hex-head screw. Other examples include pan-head screws, button-head screws, or round head screws. These can include hexagonal sockets, Phillips head sockets, slotted sockets, hi-torque sockets, square sockets, Robertson head sockets, or Torx head sockets. They can also include various custom or off-the-shelf security head screws. Any screw or bolt can be used that can perform the function specified in the specification, provide enough holding strength to perform to the typical environmental conditions expected for a solar panel array installation.

The solar panel system uses bonding devices, such as threaded fasteners with sharpened tips, for electrical continuity; for example, threaded fastener 182 and threaded fastener 174 of FIG. 62 and threaded fastener 173 of FIG. 60. These threaded fasteners are shown as pan-head self-tapping screws with Philips sockets. However, they can be any threaded fastener capable of creating electrical bonding between two electrically-conductive materials. For example, the threaded fasteners can be self-tapping screws, sheet metal screws, or self-drilling screws. Any head style can be used that allows the threaded fastener to tighten sufficiently to create an electrical bond. For example, the threaded fastener can be hex head, socket head, or pan-head. The socket can be Philips, Torx, hexagonal (i.e., Allen head), square, or Robertson.

In step 150 of FIG. 9 and its variations illustrated in FIGS. 10, 11, 22, and 32, the installer can pre-attach the solar panel end clamp assemblies, mid clamp assemblies, and catch clamp assemblies to one solar panel at a time or more than one solar panel before securing the resulting solar panel assemblies to the building surface. For example, referring to FIGS. 12 and 13, the installer can pre-attach the end clamp assemblies 111, 113 and mid clamp assemblies 112, 114 and then install the resulting solar panel assembly, the first solar panel assembly 110, to the building surface before installing catch clamp assemblies 121, 123 and mid clamp assemblies 122, 124 in FIGS. 14 and 15. The installer may instead choose to pre-attach the end clamp assemblies 111, 113 and the mid clamp assemblies 112, 114 to the first solar panel 101 (FIGS. 12 and 13), and pre-attach the catch clamp assemblies 121, 123 and the mid clamp assemblies 122, 124 to the second solar panel 102 (FIGS. 14 and 15), before attaching the first solar panel assembly 110 to the roof.

The same principle applies to the assembly sequences illustrated in FIGS. 43-46 and the assembly sequences for FIGS. 47-50. The installer can follow the sequence for individual solar panels before securing the resulting solar panel assembly to the building surface. Alternatively, the installer can follow the sequence for more than one panel before securing any of the solar panel assemblies to the building surface. In addition, the installer may find it more efficient to follow the first two steps of the sequence and install the L-feet together, either per solar panel, or for more than one solar panel.

FIGS. 23-29 illustrate a method of assembling and securing solar panel assemblies within a column of a solar panel array. Here, it was for solar panel array 100 of FIG. 1 and for column 107 of FIG. 3. As discussed, this could also apply to portrait oriented solar panel arrays, such as the solar panel array 200 of FIG. 7. An installer could use the assembly method to assemble a solar panel array in rows, rather than columns in either portrait or landscape orientation. In this scenario, the end clamp, mid clamp, and catch clamp assemblies would be secured to the left and right sides of the solar panels rather than the top and bottom of the solar panel. The solar panel assemblies would be put together across the roof rather than up or down along the roof.

The assembly method shown started with end clamp assemblies on the leading edge of the first solar panel assembly in a column and ended with end clamp assemblies on the trailing edge of the last solar panel assembly in that column. To simplify installation logistics, it is within the scope of the assembly methods illustrated to substitute mid clamp assemblies wherever end clamp assemblies are used. In one scenario, end clamp assemblies could be used on the leading edge of the first solar panel assembly in a column but not the trailing edge of the last solar panel assembly in the column. In another scenario, the end clamp assemblies could be eliminated completely and mid clamp assemblies used in their place.

The catch clamp assemblies illustrated throughout this disclosure include a seating platform with a generally curve-shaped seating surface. This generally curve-shaped seating surface in FIG. 27, for example, is the hook arm 148a which is a generally convex-shaped seating surface with respect to the panel hook platform 147a. This allows the second solar panel assembly 120 to pivot about the hook arm 148a as the open end 148d engages the hook receiver 147d. The generally curve-shaped seating surface can be a continuous smooth curve, formed from piece-wise linear segments, formed from piece-wise curved segments, or formed from piece-wise curved segments and piece-wise linear segments. As an example, the hook arm 148a could form a generally curve-shaped seating surface that has a downward-facing generally convex shape where a portion of the seating surface is flat. This portion of the seating platform can be positioned to help resist movement once the open end 148d is engaged with the hook receiver 147d.

The mid clamp and end clamp assemblies throughout this disclosure are directly securable to building structures. FIGS. 4-6, 12-17, 23-30, 33-42, 45, 46, 49, 50, 62-67, 74-79, 83-87, 91, and 92 illustrate examples of L-feet for this purpose. The mid clamp assemblies and end clamp assemblies can use other building attachment brackets or roof attachment brackets in place of the illustrated L-feet. For example, the roof attachment bracket can be another style of L-foot. For example, the L-foot could include a slot-shaped aperture as opposed to a slot-shaped opening. The L-foot could have a rectangular base or a rectangular riser. The building attachment bracket could be a T-foot, a pedestal, a pedestal with a flange portion for attaching threaded fasteners to the building surface, and a slotted pedestal to allow for height adjustment. In place of a slot-shaped opening for height adjustment, the L-foot could include a serrated groove. The mid clamp or end clamp bracket could include a serrated tongue received by the serrated groove in the L-foot. Other equivalent structures could be substituted as long as they are capable of being secured to the roof or building structure with sufficient holding force to withstand normal environmental conditions for solar panel arrays, and are capable of being used in accordance with at least some variation of the disclosed assembly methods.

FIGS. 93 and 94 show examples of mid clamp and end clamp assemblies that attach to a variety of metal roof surfaces that were created from portions of the solar panel clamp assemblies described earlier in this disclosure. For example, FIG. 93 shows how hinged metal roof mount 301 is combined with mid clamp bracket assembly 145 of FIG. 6, to form mid clamp assembly 412. Likewise, FIG. 94 shows how hinged metal roof mount 301 can be combined with end clamp bracket assembly 141 of FIG. 5, to form end clamp assembly 411. Likewise, a system designer or installer can similarly combine hinged metal roof mount 301 with mid clamp bracket 247 of FIG. 77 to create an alternative mid clamp assembly. Likewise, a system designer or installer can combine hinged metal roof mount 301 with end clamp bracket 261 of FIG. 74 to create an alternative end clamp assembly.

FIGS. 114-117 illustrate examples of metal roof surfaces that an installer can secure a solar panel array using the end clamp assembly 411 and mid clamp assembly 412. These examples are a small sample of what is possible. The angular adjustability of the hinge bases and the widthwise adjustability of the hinge platform assembly allow for securement to a wide range of flat metal roofs, ribbed or corrugated metal roofs, trapezoidal metal roofs, or standing seam roofs. The hinge bases can mount on a variety of metals. For example, the hinge bases can be secured to steel, stainless steel, zinc, copper, or aluminum roofs.

As discussed, the end clamp assembly 111 and mid clamp assembly 112 can also be secured to a variety of roof structures including flat tile, asphalt shingle, wood shingle, concrete, and planar portions of metal roofs. Examples of metal roof types with sufficiently large planar portions to accommodate the L-foot of the respective solar panel clamp assembly, include flat metal roofs, metal shake style roofs, metal shingled roofs, metal flat tile roofs, and metal slate style roofs. It is possible to attach the end clamp assembly 111 and the mid clamp assembly 112 of FIGS. 5 and 6, respectively, to the top portion of a trapezoidal roof. In this case, the top portion should be wide enough to support the L-foot of the respective solar panel clamp assembly and provide a water tight seal.

The variations described, the general principles taught, and undescribed variations, devices, and systems that encompass the general principles described in this disclosure, are within the scope of the claims.

## Claims

1. A method of securing a solar panel array to a building structure, comprising:
pre-attaching a first solar panel clamp assembly and a second solar panel clamp assembly to a first solar panel, resulting in a first solar panel assembly; and
positioning the first solar panel assembly over the building structure followed by securing the first solar panel clamp assembly and the second solar panel clamp assembly to the building structure.

2. The method of claim 1, wherein:
positioning the first solar panel assembly over the building structure followed by securing the first solar panel clamp assembly and the second solar panel clamp assembly to the building structure is carried out without positionally adjusting the first solar panel clamp assembly and the second solar panel clamp assembly lengthwise or widthwise with respect to the first solar panel.

3. The method of claim 1, further including:
pre-attaching a catch clamp assembly and a third solar panel clamp assembly to a second solar panel, resulting in a second solar panel assembly; and
rotationally engaging and securing the catch clamp assembly of the second solar panel assembly to the second solar panel clamp assembly of the first solar panel assembly before securing the third solar panel clamp assembly of the second solar panel assembly to the building structure.

4. The method of claim 3, wherein:
rotationally engaging and securing the catch clamp assembly to the second solar panel clamp assembly before securing the third solar panel clamp assembly to the building structure is carried out without positionally adjusting the first solar panel clamp assembly and the second solar panel clamp assembly lengthwise or widthwise with respect to the first solar panel.

5. The method of claim 1 or claim 3, wherein:
aligning the first solar panel clamp assembly and the second solar panel clamp assembly to first manufacturer-provided mounting holes in a first return flange of the first solar panel.

6. The method of claim 3, wherein:
aligning the catch clamp assembly and the third solar panel clamp assembly to second manufacturer-provided mounting holes in a second return flange of the second solar panel.

7. The method of claim 1 or claim 3, wherein:
placing the first solar panel face down at a job site that includes the building structure before pre-attaching the first solar panel clamp assembly and the second solar panel clamp assembly to the first solar panel; and
turning the first solar panel assembly face up before securing the first solar panel clamp assembly and the second solar panel clamp assembly to the building structure.

8. The method of claim 3, wherein:
placing the second solar panel face down at a job site before pre-attaching the catch clamp assembly and the third solar panel clamp assembly to the second solar panel; and
turning the second solar panel assembly face up before securing the third solar panel clamp assembly to the building structure.

9. A system for securing a solar panel and second solar panel to a building structure, comprising:
a catch clamp that includes a seating platform structured as a hook arm that includes an open end and a generally curve-shaped seating surface;
a mid clamp that includes a solar panel platform, a panel hook platform extending away from the solar panel platform, and a hook receiver that includes an end portion extending toward the panel hook platform; and
the panel hook platform and the hook receiver are arranged and the hook receiver is so shaped that the generally curve-shaped seating surface is pivotable against the panel hook platform as the open end engages the hook receiver.

10. The system of claim 9, wherein:
the generally curve-shaped seating surface is a downward-facing generally convex shape.

11. The system of claim 9, wherein:
the catch clamp further includes a second solar panel platform positioned above the hook arm.

12. The system of claim 11, wherein:
the solar panel platform and the panel hook platform are spaced apart so that with the generally curve-shaped seating surface resting against the panel hook platform and the open end being engaged with the hook receiver, top surfaces of the solar panel platform and the second solar panel platform are co-planar.

13. The system of claim 11, wherein:
the hook receiver and the open end are so shaped that the hook receiver creates a rotational stop for the open end.

14. The system of claim 11, wherein:
the catch clamp further includes a ball hook catch extending from the open end and the hook receiver is sized and shaped to receive the ball hook catch.

15. A device for clamping a solar panel, comprising:
a catch clamp that includes a seating platform structured as a hook arm that includes an open end and a generally curve-shaped seating surface.

16. The device of claim 15, wherein:
the generally curve-shaped seating surface is a downward-facing generally convex shape.

17. The device of claim 15, wherein:
the catch clamp further includes a panel hook bracket, the panel hook bracket includes the hook arm and a solar panel platform for seating the solar panel, the solar panel platform is positioned above the hook arm.

18. The device of claim 17, wherein:
the panel hook bracket further includes a pedestal extending between and spacing apart the solar panel platform and the hook arm.

19. The device of claim 17, wherein:
the catch clamp further includes a clamp jaw secured to and adjustably spaced apart from the panel hook bracket.

20. The device of claim 17, wherein:
the hook arm further includes a ball hook catch extending from the open end and extending away from the solar panel platform.

21. The device of claim 17, wherein:
the generally curve-shaped seating surface is a downward-facing generally convex shape.
